# EUROPEAN PATENT APPLICATION

(11) **EP 4 761 323 A1**
(43) Date of publication of application: **17.06.2026**
(21) Application number: 24853446.3
(22) Date of filing: 10.07.2024
(51) Int. Cl.: H04W 24/02

(54) **SECURITY PROCESSING METHOD AND APPARATUS, AND STORAGE MEDIUM**

(30) Priority: 11.08.2023 CN 202311016549
(71) Applicant: Datang Mobile Communications Equipment Co., Ltd., Beijing 100085 (CN)
(72) Inventor: YAN, Xue, Beijing 100085 (CN); XU, Meng, Beijing 100085 (CN); ZHOU, Ye, Beijing 100085 (CN); LIANG, Jing, Beijing 100085 (CN)
(74) Representative: Studio Torta S.p.A.
(86) International application number: PCT/CN2024/104785
(87) International publication number: WO 2025/036034

(57) **Abstract**

Provided in the present disclosure are a security processing method and apparatus, and a storage medium. The security processing method is applied to a terminal, and comprises: on the basis of security-related information, determining a security key corresponding to a target cell, wherein the target cell is a candidate target cell supporting subsequent cell changes. By means of the security processing method and apparatus, and the storage medium provided in the present disclosure, a security key is updated on the basis of security-related information, thereby ensuring a key update in a scenario of subsequent cell changes, avoiding the need to frequently reconfigure configuration information of a candidate target cell for a terminal due to the key update, reducing signaling overheads of an air interface, and reducing the waste of air interface resources.

## Description

### CROSS-REFERENCES TO RELATED APPLICATIONS

The present application claims priority to Chinese patent application No. 202311016549.5 filed on August 11, 2023, entitled "Security Processing Method and Apparatus, and Storage Medium", which is hereby incorporated by reference in its entirety.

### FIELD

The present application relates to the field of communication, and in particular to security processing methods and apparatuses, and a storage medium.

### BACKGROUND

In 5th generation new radio (5G NR) systems, for a layer1/layer2 triggered mobility (L1/L2 triggered mobility, LTM), a network device is required to pre-configure LTM candidate cell configuration information and L1 measurement configuration information for the user equipment (UE). The UE performs L1 measurements based on the L1 measurement configuration information and reports the L1 measurement results to the network device. The network device performs a cell change (handover) decision based on the L1 measurement results reported by the UE. The UE performs the cell change (handover) based on a cell change (handover) command transmitted from the network device.

In subsequent cell change scenarios, such as subsequent LTMs with inter-central units (CUs) cell changes or other subsequent cell change scenarios with key updates, air interface resources may be wasted due to frequent updates of security keys.

### BRIEF SUMMARY

Embodiments of the present application provide security processing methods and apparatuses, and a storage medium to solve the problem of a waste of air interface resources in subsequent cell change scenarios in related art.

Embodiments of the present application provide a security processing method, performed by a terminal, including:
determining a security key corresponding to a target cell based on security-related information;
where the target cell is a candidate target cell supporting subsequent cell changes.

In some embodiments, the security-related information includes one or more types of the following:
security parameter information;
security update indicator information;
first grouping identity information;
second grouping identity information; or
a security key-counter list.

In some embodiments, in case that the security-related information is security parameter information and/or security update indicator information, determining the security key corresponding to the target cell based on the security-related information includes:
determining the security key corresponding to the target cell based on the security parameter information and/or the security update indicator information included in configuration information of the target cell.

In some embodiments, the security update indicator information includes one or more pieces of the following:
information indicating whether a key update is required for a current cell change;
information indicating whether a value of security parameter information corresponding to a current cell change is required to be incremented by one; or
information indicating whether a value of security parameter information is required to be incremented by one after a security key corresponding to a current cell change is updated.

In some embodiments, in case that the security-related information is first grouping identity information, determining the security key corresponding to the target cell based on the security-related information includes:
determining the security key corresponding to the target cell as a current security key in case that first grouping identity information of a source cell is same as first grouping identity information of the target cell; or
updating a security key to obtain the security key corresponding to the target cell in case that first grouping identity information of a source cell is different from first grouping identity information of the target cell.

In some embodiments, the method further includes:
incrementing a value of security parameter information by one after updating the security key in case that second grouping identity information of the source cell is different from second grouping identity information of the target cell; or
determining that a value of security parameter information remains unchanged after updating the security key in case that second grouping identity information of the source cell is same as second grouping identity information of the target cell.

In some embodiments, determining the security key corresponding to the target cell based on the security-related information includes:
determining a security key-counter list corresponding to the target cell from the security-related information, or generating a security key-counter list corresponding to the target cell based on the security-related information; and
determining the security key corresponding to the target cell based on a security key-counter value of a source cell and the security key-counter list corresponding to the target cell.

In some embodiments, determining the security key corresponding to the target cell based on the security key-counter value of the source cell and the security key-counter list corresponding to the target cell includes:
determining the security key corresponding to the target cell as a current security key in case that the security key-counter value of the source cell is included in the security key-counter list corresponding to the target cell; or
updating a security key to obtain the security key corresponding to the target cell in case that the security key-counter value of the source cell is not included in the security key-counter list corresponding to the target cell.

In some embodiments, determining the security key corresponding to the target cell based on the security key-counter value of the source cell and the security key-counter list corresponding to the target cell includes:
determining the security key corresponding to the target cell as the current security key in case that a last security key-counter value in the security key-counter list corresponding to the target cell is equal to the security key-counter value of the source cell; or
updating the security key to obtain the security key corresponding to the target cell in case that a last security key-counter value in the security key-counter list corresponding to the target cell is greater than the security key-counter value of the source cell.

In some embodiments, generating the security key-counter list corresponding to the target cell based on the security-related information includes:
generating the security key-counter list corresponding to the target cell based on an initial security key-counter value and a global step size included in the security-related information.

In some embodiments, the first grouping identity information, or the second grouping identity information or the security key-counter list is included in configuration information of the candidate target cell.

In some embodiments, the method further includes:
receiving configuration information of the candidate target cell and/or the security-related information transmitted from a network device.

In some embodiments, the security-related information is transmitted by one or more types of the following signaling:
radio resource control (RRC) signaling;
media access control-control element (MAC-CE) signaling; or
downlink control information (DCI) signaling.

Embodiments of the present application further provide a security processing method, performed by a network device, including:
transmitting configuration information of the candidate target cell and/or security-related information to a terminal; where the security-related information is used for determining a security key corresponding to a target cell and the target cell is a candidate target cell supporting subsequent cell changes.

In some embodiments, the security-related information includes one or more types of the following:
security parameter information;
security update indicator information;
first grouping identity information;
second grouping identity information; or
a security key-counter list.

In some embodiments, the security update indicator information includes one or more pieces of the following:
information indicating whether a key update is required for a current cell change;
information indicating whether a value of security parameter information corresponding to a current cell change is required to be incremented by one; or
information indicating whether a value of security parameter information is required to be incremented by one after a security key corresponding to a current cell change is updated.

In some embodiments, the security-related information is transmitted by one or more types of the following signaling:
radio resource control (RRC) signaling;
media access control-control element (MAC-CE) signaling; or
downlink control information (DCI) signaling.

In some embodiments, transmitting the security-related information to the terminal includes:
transmitting security-related information to the terminal in one or more of the following cases:
the security key of the target cell is updated by a core network based on an access and mobility management function (AMF) key;
an access and mobility management function (AMF) key is updated by a core network; or
a conventional handover, a conditional handover or a dual active protocol stack handover occurs.

Embodiments of the present application further provide a terminal, including: a memory, a transceiver, and a processor;
where the memory is used for storing a computer program; the transceiver is used for receiving and transmitting data under control of the processor; and the processor is used for reading the computer program in the memory and performing the following:
determining a security key corresponding to a target cell based on security-related information;
where the target cell is a candidate target cell supporting subsequent cell changes.

In some embodiments, the security-related information includes one or more types of the following:
security parameter information;
security update indicator information;
first grouping identity information;
second grouping identity information; or
a security key-counter list.

In some embodiments, in case that the security-related information is security parameter information and/or security update indicator information, determining the security key corresponding to the target cell based on the security-related information includes:
determining the security key corresponding to the target cell based on the security parameter information and/or the security update indicator information included in configuration information of the target cell.

In some embodiments, the security update indicator information includes one or more pieces of the following:
information indicating whether a key update is required for a current cell change;
information indicating whether a value of security parameter information corresponding to a current cell change is required to be incremented by one; or
information indicating whether a value of security parameter information is required to be incremented by one after a security key corresponding to a current cell change is updated.

In some embodiments, in case that the security-related information is first grouping identity information, determining the security key corresponding to the target cell based on the security-related information includes:
determining the security key corresponding to the target cell as a current security key in case that first grouping identity information of a source cell is same as first grouping identity information of the target cell; or
updating a security key to obtain the security key corresponding to the target cell in case that first grouping identity information of a source cell is different from first grouping identity information of the target cell.

In some embodiments, the processor is further used for reading the computer program in the memory and performing the following operation:
incrementing a value of security parameter information by one after updating the security key in case that second grouping identity information of the source cell is different from second grouping identity information of the target cell; or
determining that a value of security parameter information remains unchanged after updating the security key in case that second grouping identity information of the source cell is same as second grouping identity information of the target cell.

In some embodiments, determining the security key corresponding to the target cell based on the security-related information includes:
determining a security key-counter list corresponding to the target cell from the security-related information, or generating a security key-counter list corresponding to the target cell based on the security-related information; and
determining the security key corresponding to the target cell based on a security key-counter value of a source cell and the security key-counter list corresponding to the target cell.

In some embodiments, determining the security key corresponding to the target cell based on the security key-counter value of the source cell and the security key-counter list corresponding to the target cell includes:
determining the security key corresponding to the target cell as a current security key in case that the security key-counter value of the source cell is included in the security key-counter list corresponding to the target cell; or
updating a security key to obtain the security key corresponding to the target cell in case that the security key-counter value of the source cell is not included in the security key-counter list corresponding to the target cell.

In some embodiments, determining the security key corresponding to the target cell based on the security key-counter value of the source cell and the security key-counter list corresponding to the target cell includes:
determining the security key corresponding to the target cell as the current security key in case that a last security key-counter value in the security key-counter list corresponding to the target cell is equal to the security key-counter value of the source cell; or
updating the security key to obtain the security key corresponding to the target cell in case that a last security key-counter value in the security key-counter list corresponding to the target cell is greater than the security key-counter value of the source cell.

In some embodiments, generating the security key-counter list corresponding to the target cell based on the security-related information includes:
generating the security key-counter list corresponding to the target cell based on an initial security key-counter value and a global step size included in the security-related information.

In some embodiments, the first grouping identity information, or the second grouping identity information or the security key-counter list is included in configuration information of the candidate target cell.

In some embodiments, the processor is further used for reading the computer program in the memory and performing the following operation:
receiving configuration information of the candidate target cell and/or the security-related information transmitted from a network device.

In some embodiments, the security-related information is transmitted by one or more types of the following signaling:
radio resource control (RRC) signaling;
media access control-control element (MAC-CE) signaling; or
downlink control information (DCI) signaling.

Embodiments of the present application further provide a network device, including: a memory, a transceiver, and a processor;
where the memory is used for storing a computer program; the transceiver is used for receiving and transmitting data under control of the processor; and the processor is used for reading the computer program in the memory and performing the following:
transmitting configuration information of the candidate target cell and/or security-related information to a terminal; where the security-related information is used for determining a security key corresponding to a target cell and the target cell is a candidate target cell supporting subsequent cell changes.

In some embodiments, the security-related information includes one or more types of the following:
security parameter information;
security update indicator information;
first grouping identity information;
second grouping identity information; or
a security key-counter list.

In some embodiments, the security update indicator information includes one or more pieces of the following:
information indicating whether a key update is required for a current cell change;
information indicating whether a value of security parameter information corresponding to a current cell change is required to be incremented by one; or
information indicating whether a value of security parameter information is required to be incremented by one after a security key corresponding to a current cell change is updated.

In some embodiments, the security-related information is transmitted by one or more types of the following signaling:
radio resource control (RRC) signaling;
media access control-control element (MAC-CE) signaling; or
downlink control information (DCI) signaling.

In some embodiments, transmitting the security-related information to the terminal includes:
transmitting security-related information to the terminal in one or more of the following cases:
the security key of the target cell is updated by a core network based on an access and mobility management function (AMF) key;
an access and mobility management function (AMF) key is updated by a core network; or
a conventional handover, a conditional handover or a dual active protocol stack handover occurs.

Embodiments of the present application further provide a security processing apparatus, including:
a determining module, used for determining a security key corresponding to a target cell based on security-related information;
where the target cell is a candidate target cell supporting subsequent cell changes.

In some embodiments, the security-related information includes one or more types of the following:
security parameter information;
security update indicator information;
first grouping identity information;
second grouping identity information; or
a security key-counter list.

In some embodiments, in case that the security-related information is security parameter information and/or security update indicator information, the determining module includes:
a first determining unit, used for determining the security key corresponding to the target cell based on the security parameter information and/or the security update indicator information included in configuration information of the target cell.

In some embodiments, the security update indicator information includes one or more pieces of the following:
information indicating whether a key update is required for a current cell change;
information indicating whether a value of security parameter information corresponding to a current cell change is required to be incremented by one; or
information indicating whether a value of security parameter information is required to be incremented by one after a security key corresponding to a current cell change is updated.

In some embodiments, in case that the security-related information is first grouping identity information, the determining module includes:
a second determining unit, used for determining the security key corresponding to the target cell as a current security key in case that first grouping identity information of a source cell is same as first grouping identity information of the target cell; or
an obtaining unit, used for updating a security key to obtain the security key corresponding to the target cell in case that first grouping identity information of a source cell is different from first grouping identity information of the target cell.

In some embodiments, the determining module further includes:
a calculating unit, used for incrementing a value of security parameter information by one after updating the security key in case that second grouping identity information of the source cell is different from second grouping identity information of the target cell; or
a third determining unit, used for determining that a value of security parameter information remains unchanged after updating the security key in case that second grouping identity information of the source cell is same as second grouping identity information of the target cell.

In some embodiments, the determining module includes:
a fourth determining unit, used for determining a security key-counter list corresponding to the target cell from the security-related information, or generating a security key-counter list corresponding to the target cell based on the security-related information; and
a fifth determining unit, used for determining the security key corresponding to the target cell based on a security key-counter value of a source cell and the security key-counter list corresponding to the target cell.

In some embodiments, the fifth determining unit includes:
a first determining subunit, used for determining the security key corresponding to the target cell as a current security key in case that the security key-counter value of the source cell is included in the security key-counter list corresponding to the target cell; or
a first obtaining subunit, used for updating a security key to obtain the security key corresponding to the target cell in case that the security key-counter value of the source cell is not included in the security key-counter list corresponding to the target cell.

In some embodiments, the fifth determining unit includes:
a second determining subunit, used for determining the security key corresponding to the target cell as the current security key in case that a last security key-counter value in the security key-counter list corresponding to the target cell is equal to the security key-counter value of the source cell; or
a second obtaining subunit, used for updating the security key to obtain the security key corresponding to the target cell in case that a last security key-counter value in the security key-counter list corresponding to the target cell is greater than the security key-counter value of the source cell.

In some embodiments, the fourth determining unit includes:
a third obtaining subunit, used for generating the security key-counter list corresponding to the target cell based on an initial security key-counter value and a global step size included in the security-related information.

In some embodiments, the first grouping identity information, or the second grouping identity information or the security key-counter list is included in configuration information of the candidate target cell.

In some embodiments, the apparatus further includes:
a receiving module, used for receiving configuration information of the candidate target cell and/or the security-related information transmitted from a network device.

In some embodiments, the security-related information is transmitted by one or more types of the following signaling:
radio resource control (RRC) signaling;
media access control-control element (MAC-CE) signaling; or
downlink control information (DCI) signaling.

Embodiments of the present application further provide a security processing apparatus, including:
a transmitting module, used for transmitting configuration information of the candidate target cell and/or security-related information to a terminal; where the security-related information is used for determining a security key corresponding to a target cell and the target cell is a candidate target cell supporting subsequent cell changes.

In some embodiments, the security-related information includes one or more types of the following:
security parameter information;
security update indicator information;
first grouping identity information;
second grouping identity information; or
a security key-counter list.

In some embodiments, the security update indicator information includes one or more pieces of the following:
information indicating whether a key update is required for a current cell change;
information indicating whether a value of security parameter information corresponding to a current cell change is required to be incremented by one; or
information indicating whether a value of security parameter information is required to be incremented by one after a security key corresponding to a current cell change is updated.

In some embodiments, the security-related information is transmitted by one or more types of the following signaling:
radio resource control (RRC) signaling;
media access control-control element (MAC-CE) signaling; or
downlink control information (DCI) signaling.

In some embodiments, the transmitting module includes:
a transmitting unit, used for transmitting security-related information to the terminal in one or more of the following cases:
the security key of the target cell is updated by a core network based on an access and mobility management function (AMF) key;
an access and mobility management function (AMF) key is updated by a core network; or
a conventional handover, a conditional handover or a dual active protocol stack handover occurs.

Embodiments of the present application further provide a non-transient readable storage medium storing a computer program for causing a processor to perform the above security processing methods.

Embodiments of the present application further provide a processor-readable storage medium storing a computer program for causing a processor to perform the above security processing methods.

Embodiments of the present application further provide a computer-readable storage medium storing a computer program for causing a computer to perform the above security processing methods.

Embodiments of the present application further provide a communication device storing a computer program for causing the communication device to perform the above security processing methods.

Embodiments of the present application further provide a chip product storing a computer program for causing the chip product to perform the above security processing methods.

According to security processing methods and apparatuses, and a storage medium provided in the embodiments of the present application, the security key corresponding to the target cell is determined based on the security-related information where the target cell is a candidate target cell supporting subsequent cell changes. The key updates in a subsequent cell change scenario are ensured, the requirement to frequently reconfigure configuration information of the candidate target cell for the terminal due to key updates is avoided, and the waste of air interface resources is reduced.

### BRIEF DESCRIPTION OF THE DRAWINGS

To clearly illustrate the solutions in the embodiments of the present application or related art, the drawings used in the description of the embodiments or related art are briefly described below. The drawings in the following description are only some embodiments of the present application, and other drawings may be obtained according to these drawings without any creative effort for those skilled in the art.
FIG. 1 is a first schematic flowchart of a security processing method according to an embodiment of the present application;
FIG. 2 is a second schematic flowchart of a security processing method according to an embodiment of the present application;
FIG. 3 is a schematic structural diagram of a user equipment (UE) according to an embodiment of the present application;
FIG. 4 is a schematic structural diagram of a network device according to an embodiment of the present application;
FIG. 5 is a first schematic structural diagram of a security processing apparatus according to an embodiment of the present application; and
FIG. 6 is a second schematic structural diagram of a security processing apparatus according to an embodiment of the present application.

### DETAILED DESCRIPTION

For an intra-central unit (CU) layer1/layer2 triggered mobility (L1/L2 triggered mobility, LTM), a key used by a terminal remains unchanged after a cell change. In the intra-CU scenario, a subsequent LTM is supported, that is, a network pre-configures LTM candidate cells. The UE may continue to maintain configuration information of the candidate target cell for subsequent LTMs after performing one LTM, which avoids the network reconfiguring or reinitializing an LTM every time.

For an inter-CU LTM, a key used by a UE may be changed after a cell change, and the configuration information of the candidate target cell is required to be frequently reconfigured to the UE, resulting in a waste of air interface resources.

In addition, considering a coexistence scenario, for example, in a scenario where the intra-CU and the inter-CU coexist, the UE cannot know under which situations a key update is required (inter-CU) and under which situations a key update is not required (intra-CU). Therefore, the network device and the UE need to update the key every time an LTM occurs and the UE uses the new key to perform signaling/data interaction with the target cell after accessing the target cell even in situations where no key update is required, such as the intra-CU cell change. Unnecessary key updates and data interruptions due to the key update are led. The above problems exist on both a master cell group (MCG) side and a secondary cell group (SCG) side.

To support subsequent LTM and ensure that the network does not reconfigure the target cell configuration information due to key problems after each LTM, a solution is needed for the UE and the network side to derive the new key, thereby avoiding frequent UE reconfiguration due to the key changes.

To reduce unnecessary key updates and unnecessary data interruptions due to the key updates while ensuring subsequent cell changes, the UE is also required to know under which situations the key update is required (inter-CU) and under which situations the key update is not required (intra-CU).

Based on the above problems, embodiments of the present application provide a security processing method. According to the method, the security key corresponding to the target cell is determined based on the security-related information where the target cell is a candidate target cell supporting subsequent cell changes. The key updates in the subsequent cell change scenarios are ensured, avoiding frequent radio resource control (RRC) reconfiguration or LTM initialization due to the key updates, reducing signaling overhead, and minimizing the waste of air interface resources.

To make the objectives, solutions, and advantages of the embodiments of the present application clearer, the solutions in the embodiments of the present application are clearly and completely described below in conjunction with the accompanying drawings in the embodiments of the present application. The embodiments are only a part of the embodiments of the present application, and not all of the embodiments. All other embodiments obtained by those skilled in the art based on the embodiments of the present application without any creative effort belong to the scope of the present application.

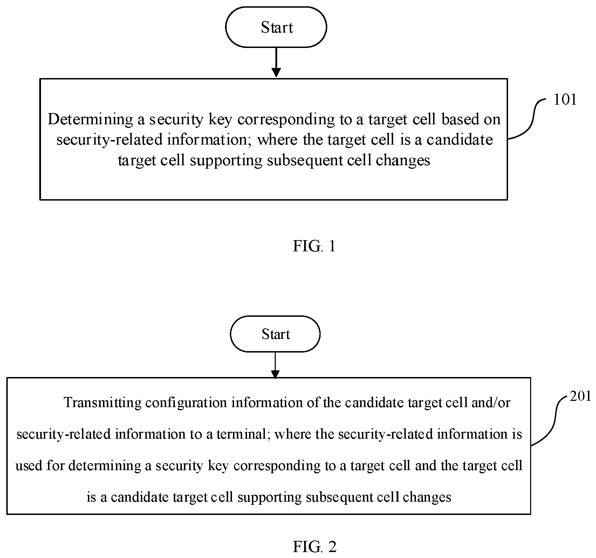

FIG. 1 is a first schematic flowchart of a security processing method according to an embodiment of the present application. As shown in FIG. 1, embodiment of the present application provides a security processing method, performed by a terminal such as a mobile phone, etc. The method includes:
step 101, determining a security key corresponding to a target cell based on security-related information; where the target cell is a candidate target cell supporting subsequent cell changes.

In an embodiment, the security-related information is information used to determine the security key corresponding to the target cell. The security key corresponding to the target cell is a key used by the terminal to perform signaling/data interaction with the target cell after accessing the target cell.

In the embodiment the present application, the security-related information is carried in a cell change command, or the UE receives security-related information transmitted from the network device before performing the cell change, or receives security-related information transmitted from the network device after successfully accessing the target cell, or the security-related information is included in the configuration information of the candidate target cell pre-configured by the network device.

The target cell is the candidate target cell supporting subsequent cell changes. The subsequent cell changes means that the UE continues to perform following cell changes (for example, continue to perform the cell changes in the configured candidate target cells) after performing the cell change without reconfiguration or reinitialization, such as a subsequent LTM.

For example, a source base station transmits, to the UE, a cell change command including security-related information. The UE receives the cell change command and determines whether and/or how to update the key based on the security-related information included in the cell change command. If the key update is required, a new security key is calculated and used as the security key corresponding to the target cell.

For another example, before the source base station transmits the cell change command, the security-related information is transmitted to the UE. Based on the security-related information, the UE determines whether and/or how to update the key. If the key update is required, the new security key is calculated and is used as the security key corresponding to the target cell.

For another example, after the UE accesses the target cell, the target base station transmits the security-related information to the UE. After receiving the security-related information from the target base station, the UE determines whether the key update is required for a current or next cell change based on the security-related information. If the key update is required, the new security key is calculated and is used as the security key corresponding to the target cell (the target cell is a target cell for the current or next cell change).

For another example, before an initial cell change is performed, the network device configures configuration information for each candidate target cell for the UE where the security-related information is carried in the configuration information of the corresponding candidate target cell. Each time the following cell change is performed, the UE obtains the security-related information of the target cell from the configuration information of the candidate target cell pre-configured by the network before the initial cell change, and determines whether and/or how to update the key based on the security-related information. If the key update is required, the new security key is calculated and is used as the security key corresponding to the target cell.

It should be noted that whether the key update is required is determined by the network side, and the UE determines whether to update the key based on the security-related information.

According to the security processing method provided in the embodiment of the present application, the security key corresponding to the target cell is determined based on the security-related information where the target cell is the candidate target cell supporting subsequent cell changes. The key updates in the subsequent cell change scenario are realized, and the UE can maintain the configuration information of the candidate target cell for following cell changes after performing the cell change, avoiding frequent reconfiguration or initialization due to the key updates, reducing signaling overhead, and minimizing the waste of air interface resources.

In some embodiments, the security-related information includes one or more types of the following:
security parameter information;
security update indicator information;
first grouping identity information;
second grouping identity information; or
a security key-counter list.

In an embodiment, the security-related information includes the security parameter information. The security parameter information may be a next hop chaining count (NCC) and is used to obtain the security key.

The security update indicator information is used to indicate whether the key update is required for a current cell change, and/or to indicate whether a value of the security parameter information corresponding to the current cell change is required to be incremented by one, and/or to indicate whether a value of the security parameter information is required to be incremented by one after a security key update corresponding to a current cell change is updated.

In the embodiment, the security parameter information or the security update indicator information may be transmitted to the UE by being carried in the cell change command while performing the cell change, or may be transmitted to the UE before performing the cell change, or may be transmitted to the UE after successfully accessing the target cell.

In an embodiment, the first grouping identity information is used to determine whether the key update is required. First grouping identity information values of candidate target cells in each secondary base station/secondary node (SN) are the same, and different first grouping identity information values are configured for candidate target cells in different SNs.

In the embodiment, the first grouping identity information may be information obtained by splicing two pieces of identity information. For example, the first grouping identity information consists of base station (gNB) identity information, CU identity information, central unit-control plane (CU-CP) identity information, or core network (CN) identity information as a first part, and central unit-user plane (CU-UP) identity information, such as a security domain identifier (ID), as a second part.

In case that there is only gNB identity information, CN identity information, CU identity information, or CU-CP identity information and no CU-UP identity information, the first grouping identity information may be the gNB identity information, the CN identity information, the CU i identity information or the CU-CP identity information.

In an embodiment, the second grouping identity information is used to determine whether a value of the security parameter information is required to be incremented by one after updating the key.

In the embodiment, the second grouping identity information may be gNB identity information, CN identity information, CU identity information, or CU-CP identity information.

In some cases, there is only one piece of identity information and the first grouping identity information and the second grouping identity information are the same information, or it may be said the first grouping identity information and the second grouping identity information are the same, that is, there is only one piece of grouping identity information, not two pieces of grouping identity information. For example, there is only gNB identity information, or CN identity information, or CU identity information, or CU-CP identity information. The usage of the identity information may be as follows: in case that the identity information of a source cell is the same as identity information of the target cell, the UE determines that no key update is required; and in case that the identity information of a source cell is different from the identity information of the target cell, the UE determines that the key update is required and the value of security parameter information (for example, a NCC value) maintained by the UE is required to be incremented by one after updating the key.

In an embodiment, the security key-counter list (sk-counter list) includes multiple security key-counter values. The security key-counter lists for candidate target cells in the same SN are the same, while the security key-counter lists for candidate target cells in different SNs are different, and no duplicate security key-counter values are included in the security key-counter lists for the candidate target cells in different SNs.

In an embodiment, the security key-counter list may be calculated based on an initial security key-counter value and a global step size and the security-related information may include configuration information of the initial security key-counter value and the global step size.

According to the security processing method provided in the embodiments of the present application, multiple types of security-related information for determining the security key are provided and one or more of types of security-related information may be flexibly selected for key update judgment and calculation in different scenarios, avoiding reconfiguration or reinitialization operations due to each key update, reducing signaling overhead, and minimizing the waste of air interface resources.

In some embodiments, the security-related information is transmitted by one or more types of the following signaling:
radio resource control (RRC) signaling;
media access control-control element (MAC-CE) signaling; or
downlink control information (DCI) signaling.

In the embodiment, the security-related information may be transmitted by a DCI command, a MAC-CE command, or RRC signaling. The security-related information may be transmitted by the same signaling as the configuration information of the candidate target cell, or be transmitted by different signaling.

In some embodiments, in case that the security-related information is security parameter information and/or security update indicator information, determining the security key corresponding to the target cell based on the security-related information includes:
determining the security key corresponding to the target cell based on the security parameter information and/or the security update indicator information included in configuration information of the target cell.

In an embodiment, in case that the configuration information of the target cell used by the UE in the current cell change includes received security parameter information, the security parameter information is the security-related information, and the UE determines whether to update the key based on the security parameter information. The configuration information of the target cell is the configuration information used by the UE and may include configuration information of the candidate target cell and/or security-related information. The configuration information of the candidate target cell and the security-related information may be transmitted by the same signaling, or be transmitted by different signaling.

In an embodiment, in case that the configuration information of the target cell used by the UE in the current cell change includes received security update indicator information, the security update indicator information is the security-related information, and the UE determines whether to update the key based on the security update indicator information The configuration information of the target cell is the configuration information used by the UE and may include configuration information of the candidate target cell and/or security-related information. The configuration information of the candidate target cell and the security-related information may be transmitted by the same signaling, or be transmitted by different signaling.

For example, in case that the UE obtains the security parameter information from the configuration information of the target cell, the UE derives a new security key based on the security parameter information and obtains the security key corresponding to the target cell.

For another example, in case that the UE does not receive the security parameter information from the network device, the UE continues to use a current security key as the security key corresponding to the target cell.

In case of receiving the security parameter information, the UE compares the security parameter information with a NCC value corresponding to the current security key generated by the UE. If the security parameter information is the same as the NCC value, the UE uses a horizontal key derivation method to derive the new key. The calculation method is to use a current security key of the UE, a physical cell identity (PCI) of the target cell, and an absolute frequency of the target cell to derive the new security key. If the security parameter information and the NCC value are different, the UE uses a vertical key derivation method to derive the new security key. The calculation method is to use a next hop (NH) value, a PCI of the target cell, and an absolute frequency of the target cell to derive the new security key.

For another example, the UE obtains the security update indicator information from the configuration information of the target cell, and the UE determines whether the key update is required based on the security update indicator information. If the key update is required, the new security key is derived and the security key corresponding to the target cell is obtained.

For another example, in case that the UE does not receive the security update indicator information from the network device, the UE continues to use the current security key as the security key corresponding to the target cell.

In case that the UE receives the security update indicator information indicating that the value of the security parameter information corresponding to the current cell change is not required to be incremented by one, for the current cell change, the UE uses a horizontal key derivation method to derive the new key. The calculation method is to use the current security key of the UE, the PCI of the target cell, and the absolute frequency of the target cell to derive the new security key. In case that the UE receives the security update indicator information indicating that the value of the security parameter information corresponding to the current cell change is required to be incremented by one, for the current cell change, the UE uses a vertical key derivation method to derive the new key. The calculation method is to use the NH value, the PCI of the target cell, and the absolute frequency of the target cell to derive the new security key.

In case that the UE receives information indicating that the value of the security parameter information is not required to be incremented by one after the security key corresponding to the current cell change is updated, in one case, the new security key of a next cell change is derived using the horizontal key derivation method (when the new security key is required to be derived). That is, when the UE performs the next cell change, (in one embodiment) the UE compares the NCC value corresponding to the generation of the current source cell security key with the NCC value currently stored by the UE. If the above two NCC values are the same, the UE determines that the new security key is derived using the horizontal key derivation method. The calculation method of the horizontal key derivation method is to use the key of the current cell, the PCI of the target cell, and the absolute frequency information of the target cell to derive the new security key.

In case that the UE receives information indicating that the value of the security parameter information is required to be incremented by one after the security key corresponding to the current cell change is updated, in one case, the new security key of the next cell change is derived using the vertical key derivation method (when the new security key is required to be derived). That is, when the UE performs the next cell change, (in one embodiment) the UE compares the NCC value corresponding to the generation of the current source cell security key with the NCC value currently stored by the UE. If the above two NCC values are different, the UE determines that the new security key is derived using the vertical key derivation method. The calculation method of the vertical key derivation method is to use the NH value, the PCI of the target cell, and the absolute frequency information of the target cell to derive the new security key.

The security processing method provided by the above embodiments is further described below by means of specific example.

### Example 1

The network device transmits the security parameter information to the UE during the cell change.

Step 1: The network device configures the configuration information of the candidate target cells that support subsequent cell changes for the UE.

Step 2: The network device transmits the cell change command to the UE, notifying the UE to perform the cell change, and the network device transmits the security parameter information (for example the NCC value) to the UE.

In an embodiment, the security parameter information may be transmitted by the DCI command, the MAC-CE command, or the RRC signaling.

The security parameter information may be transmitted from the source cell to the UE in the cell change command, or it may be transmitted from the source cell to the UE before the UE receives the cell change command, or it may be transmitted from the target cell to the UE after the UE accesses the target cell.

The security parameter information may be transmitted to the UE by the same signaling or different signaling as the configuration information of the candidate target cell.

Step 3: The UE derives the new security key (the security key corresponding to the target cell) based on the received security parameter information; in case that the UE does not receive the security parameter information transmitted from the network, the UE continues to use the old key.

Step 4: The source base station transmits the new security key and/or the security parameter information to the target base station by interface signaling.

It should be noted that an order for performing the step 4 and any of steps 1, 2, or 3 is not limited here; that is, the step 4 may be performed at any time.

Step 5: After accessing the target cell, the UE uses the new security key to perform signaling/data interaction with the target cell; or, in case that the UE does not receive the security parameter information transmitted by the network, the UE continues to use the old key to perform signaling/data interaction with the target cell after accessing the target cell.

Step 6: After performing the cell change command, the UE continues to maintain the configuration information for the subsequent cell changes for following cell changes.

In addition, after the UE successfully accesses the target cell, the target cell also transmits this security parameter information to the UE for the following cell changes. In case that the UE learns that the key update is required for the following cell changes, the UE uses the security parameter information received from the target cell to derive the new security key.

In some embodiments, the security update indicator information includes one or more pieces of the following:
information indicating whether a key update is required for a current cell change;
information indicating whether a value of security parameter information corresponding to a current cell change is required to be incremented by one; or
information indicating whether a value of security parameter information is required to be incremented by one after a security key corresponding to a current cell change is updated.

In an embodiment, the security update indicator information includes the information indicating whether the key update is required for the current cell change; and/or the information indicating whether the value of security parameter information corresponding to the current cell change is required to be incremented by one; and/or the information indicating whether the value of security parameter information is required to be incremented by one after the security key corresponding to the current cell change is updated.

For example, in case that the UE receives the security update indicator information of 0, no key update is required for the current cell change, and in case that the UE receives the security update indicator information of 1, the key update is required for the current cell change.

For another example, in case that the UE receives the security update indicator information of 0, the value of security parameter information corresponding to the current cell change is not required to be incremented by one, and in case that the UE receives the security update indicator information of 1, the value of security parameter information corresponding to the current cell change is required to be incremented by one.

For still another example, in case that the UE receives the security update indicator information of 0, the value of security parameter information is not required to be incremented by one after the security key corresponding to the current cell change is updated, and in case that the UE receives the security update indicator information of 1, the value of security parameter information is required to be incremented by one after the security key corresponding to the current cell change is updated.

The security processing method provided by the above embodiments is further described below by means of specific example.

### Example 2

The network device transmits the security update indicator information to the UE during the cell change.

Step 1: The network device configures the configuration information of the candidate target cells that support subsequent cell changes for the UE.

Step 2: The network device transmits the cell change command to the UE, notifying the UE to perform the cell change, and the network device transmits the security update indicator information to the UE.

In an embodiment, the security update indicator information includes one or more pieces of the following:
information indicating whether the key update is required for the current cell change;
information indicating whether the value of security parameter information corresponding to the current cell change is required to be incremented by one; or
information indicating whether the value of security parameter information is required to be incremented by one after the security key corresponding to the current cell change is updated.

In an embodiment, the security update indicator information may be transmitted by the DCI command, the MAC-CE command, or the RRC signaling.

The security update indicator information may be transmitted from the source cell to the UE in the cell change command, or it may be transmitted from the source cell to the UE before the UE receives the cell change command, or it may be transmitted from the target cell to the UE after the UE accesses the target cell.

The security update indicator information may be transmitted to the UE by the same signaling or different signaling as the configuration information of the candidate target cell.

Step 3: The UE determines whether the key update is required and how to derive the new security key based on the received security update indicator information. If the key update is required, the UE derives the new security key based on the security update indicator information. The method for the UE to derive the new security key is as following.

The UE maintains one piece of security parameter information (NCC value). In case that the security update indicator information indicates that the security parameter information remains unchanged, the UE uses a first method (for example, the horizontal key derivation method) to derive the key. That is, the UE calculates the new security key based on the current security key and the PCI and the absolute frequency information of the target cell, and maintains the security parameter information (NCC value) unchanged.

In case that the security update indicator information indicates the security parameter information is required to be incremented by one, the UE uses a second method (for example, the vertical key derivation method) to derive the key. That is, the UE calculates the new security key based on the NH parameter value and the PCI and the absolute frequency information of the target cell, and increments one to the security parameter information (NCC value) maintained by the UE.

Step 3a: In case that the UE does not receive the security parameter information transmitted from the network, the UE continues to use the old key.

Step 4: The source base station derives the new security key, and transmits the new security key and/or the security parameter information to the target base station by interface signaling.

It should be noted that an order for performing the step 4 and any of steps 1, 2, or 3 is not limited here; that is, the step 4 may be performed at any time.

Step 5: After accessing the target cell, the UE uses the new security key to perform signaling/data interaction with the target cell, or continues to use the old key to perform signaling/data interaction with the target cell.

Step 6: After performing the cell change command, the UE continues to maintain the configuration information of candidate target cells supporting subsequent cell changes for following cell changes.

In addition, the method for the UE to derive the new security key based on the security update indicator information may further include the following.

The UE maintains one piece of security parameter information (NCC value). After the UE accesses the target cell successfully, the target cell transmits the security update indicator information to the UE. Based on the security update indicator information, the UE determines whether to keep the security parameter information (NCC value) unchanged or to increment one to the security parameter information (NCC value), and uses the security parameter information for following cell changes. In case that the UE learns that the key update is required for following cell changes, the UE derives the new security key based on the maintained security parameter information (NCC value). The security update indicator information is the information indicating whether the security parameter information is required to be incremented by one after the security key corresponding to the current cell change is updated.

According to the security processing method provided in the embodiment of the present application, whether to perform the key update is determined based on the security parameter information or the security update indicator information and the security key corresponding to the target cell is determined, avoiding the reconfiguration or reinitialization operations due to each key update, reducing signaling overhead, and achieving subsequent cell changes in various scenarios.

### Example 3

The network device reconfigures security-related parameters after the cell change.

Step 1: The source base station transmits the new security key and/or the security parameter information (NCC value) to the target base station by the interface signaling.

Step 2: The network device configures the configuration information (including the security-related parameters) of the candidate target cells supporting subsequent cell changes for the UE.

In an embodiment, the network device only configures the security-related parameters for candidate target cells requiring key changes when performing a cell change from the current source cell to the target cell and does not configure the security-related parameters for other candidate target cells.

Step 3: The network device transmits the cell change command to the UE, notifying the UE to perform the cell change.

Step 4: The UE derives the new security key based on the security-related parameters of the target cell in the configuration information of the candidate target cell pre-configured by the network.

Step 4a: In case that no security-related parameters are configured for the target cell in the subsequent cell change configuration information, the UE continues to use the old key.

Step 5: After accessing the target cell, the UE uses the new security key to perform signaling/data interaction with the target cell or, continues to use the old key to perform signaling/data interaction with the target cell.

Step 6: After performing the cell change command, the UE continues to maintain the configuration information of candidate target cells supporting subsequent cell changes for the following cell changes.

Step 7: The target cell reconfigures the security-related parameters for the UE for the subsequent cell changes. Step 7 is optional, in case that the network finds that updating the security-related parameters is not required, step 7 can be omitted. Security-related parameters include one or more of the following:
key update indicator (keySetChangeIndicator);
next hop chaining count (NCC); or
nas-Container parameter.

It should be noted that the reconfiguration of security-related parameters for the target cells also follows the same principle: the security-related parameters are configured only for candidate target cells that require key updates when performing cell changes, and the security-related parameters are not configured for other candidate target cells.

Network devices may reconfigure the security-related parameters using the DCI commands, the MAC-CE commands, or the RRC signaling.

The new/old security parameter information (NCC value) and/or the new security key are also required to be transmitted to the corresponding target base station by the interface signaling.

Furthermore, following cell change processes may involve interface signaling interactions and the source base station is required to transmit the configuration information of the candidate target cell to the target base station by the interface signaling.

In some embodiments, in case that the security-related information is first grouping identity information, determining the security key corresponding to the target cell based on the security-related information includes:
determining the security key corresponding to the target cell as a current security key in case that first grouping identity information of a source cell is same as first grouping identity information of the target cell; or
updating a security key to obtain the security key corresponding to the target cell in case that first grouping identity information of a source cell is different from first grouping identity information of the target cell.

In an embodiment, by comparing the security-related information corresponding to the source cell and the target cell respectively, whether the key update is required is determined.

For example, the first grouping identity information of the source cell is compared with the first grouping identity information of the target cell, in case that the above two pieces of first grouping identity information are the same, no key update is required during the current cell change is determined, and the old key, i.e., the current security key, may continuously be used as the security key corresponding to the target cell.

For another example, the first grouping identity information of the source cell is compared with the first grouping identity information of the target cell, in case that the above two pieces of first grouping identity information are different, the key update is required during the current cell change.

The security processing method provided by the above embodiments is further described below by means of specific example.

### Example 4

Each time the cell change occurs, the UE calculates the new security key itself.

Step 1: The network device configures the configuration information and/or the security-related information of the candidate target cells supporting subsequent cell changes for the UE.

In an embodiment, the security-related information includes the first grouping identity information configured for each candidate target cell. The first grouping identity information is used by the UE to determine whether the key update is required each time the cell change is performed.

Step 2: The network transmits the cell change command to the UE to notify the UE to perform the cell change.

Step 3: Based on the first grouping identity information of the source cell and the target cell, the UE determines whether the key update is required during the current cell change, which may be divided into at least one of the following situations:
in case that the first grouping identity information of the source cell is same as the first grouping identity information of the target cell, the UE is not required to update the key during the current cell change; or
in case that the first grouping identity information of the source cell is different from the first grouping identity information of the target cell, the UE is required to update the key and derive the new security key during the current cell change.

Step 4: After performing the cell change command, the UE continues to maintain the configuration information of candidate target cells supporting the subsequent cell changes for the following cell changes.

Step 5: In case that the key update is required, the source base station transmits the new security key and/or the security parameter information (NCC value) to the target base station.

It should be noted that an order for performing the step 5 and any of steps 1 to 4 is not limited here; that is, the step 5 may be performed at any time.

### Example 5

Each time the cell change occurs, the UE determines whether the key update is required based on the first grouping identity information.

The network device firstly configures one first grouping identity information for each candidate cell. For example, the network device configures the same first grouping identity information value for candidate cells in each SN, and configures different first grouping identity values for candidate cells in different SNs.

When performing the cell change on the SCG side, the UE determines whether the source primary secondary cell (PSCell) and the target PSCell have the same first grouping identity information. In case that the first grouping identity information of the source PSCell is same as the first grouping identity information of the target PSCell, it indicates that the source cell and the target cell are in the same SN, and no key update is required when performing the cell change from the source cell to the target cell.

In case that the first grouping identity information of the source PSCell is different from the first grouping identity information of the target PSCell, it indicates that the source cell and the target cell are in different SNs, and the key update is required when performing the cell change from the source cell to the target cell. The UE calculates the new security key-counter (sk-counter) value and generates the new security key on the SCG side by the security key on the MCG side and the new security key-counter value. The new security key on the SCG side is used for the UE to perform signaling/data interaction with the target PSCell after accessing the target PSCell.

According to the security processing method provided in the embodiment of the present application, by using the first grouping identity information as the security-related information, the UE may dependently determine whether to update the key and calculate the new security key based on the first grouping identity information of the source cell and the first grouping identity information of the target cell.

In some embodiments, the method further includes:
incrementing a value of security parameter information by one after updating the security key in case that second grouping identity information of the source cell is different from second grouping identity information of the target cell; or
determining that a value of security parameter information remains unchanged after updating the security key in case that second grouping identity information of the source cell is same as second grouping identity information of the target cell.

In an embodiment, after comparing and determining that the first grouping identity information of the source cell is different from the first grouping identity information of the target cell, the security key is required to be updated is determined. Then the second grouping identity information of the source cell is compared and determined whether it is same as the second grouping identity information of the target cell, in order to determine whether the security parameter information is required to be changed after the security key is updated.

For example, in case that the first grouping identity information of the source cell is different from the first grouping identity information of the target cell, the UE determines that the key is required to be updated. Then, in case that the second grouping identity information of the source cell is different from the second grouping identity information of the target cell, the value of the security parameter information is required to be incremented by one after the security key is updated.

For another example, in case that the first grouping identity information of the source cell is different from the first grouping identity information of the target cell, the UE determines that the key is not required to be updated. Then, in case that the second grouping identity information of the source cell is same as the second grouping identity information of the target cell, the value of the security parameter information remains unchanged after the security key is updated.

In an embodiment, the initial security parameter information, i.e., the initial NCC value, may be transmitted to the UE in advance, or transmitted to the UE in the first cell change command, or transmitted to the UE in the candidate target cell configuration. During the cell change process, the UE is required to maintain this NCC value. After each cell change key update, whether to update this NCC value based on the second grouping identity information is determined. If this NCC value is required to be updated, the NCC value is required to be incremented by one.

In case that the first grouping identity information of the source cell is different from the first grouping identity information of the target cell and the second grouping identity information of the source cell is same as the second grouping identity information of the target cell, the value of the security parameter information remains unchanged after the security key is updated. In one case, it means that the key is derived by the horizontal key derivation method in the next cell change (if the new security key is required to be derived), that is, when performing the next cell change, (in one embodiment) the UE compares the NCC value corresponding to the generation of the current source cell security key with currently stored by the UE. If the above two NCC values are the same, the UE determines that the new security key is derived using the horizontal key derivation method. The calculation method of the horizontal key derivation method is to use the key of the current cell, the PCI of the target cell, and the absolute frequency information of the target cell to derive the new security key.

In case that the first grouping identity information of the source cell is different from the first grouping identity information of the target cell and the second grouping identity information of the source cell is different from the second grouping identity information of the target cell, the value of the security parameter information is required to be incremented by one after the security key is updated. In one case, it means that the key is derived by the vertical key derivation method in the next cell change (if the new security key is required to be derived), that is, when performing the next cell change, (in one embodiment) the UE compares the NCC value corresponding to the generation of the current source cell security key with currently stored by the UE. If the above two NCC values are different, the UE determines that the new security key is derived using the vertical key derivation method. The calculation method of the vertical key derivation method is to use the NH value, the PCI of the target cell, and the absolute frequency information of the target cell to derive the new security key.

The security processing method provided by the above embodiments is further described below by means of specific example.

### Example 6

Each time the cell change occurs, the UE calculates the new security key itself.

This example is based on a determined result of the first grouping identity information in Example 4. In case that the determined result in Example 4 is that the first grouping identity information of the source cell is different from the first grouping identity information of the target cell, the key is required to be updated, and whether the security parameter information is required to be changed is further determined based on the second grouping identity information.

In an embodiment, the security-related information includes the second grouping identity information configured for each candidate target cell, and the second grouping identity information is used by the UE to determine whether the security parameter information (NCC value) maintained by the UE is required to be incremented by one after each cell change. In case that the second grouping identity information of the source cell is same as the second grouping identity information of the target cell, the security parameter information (NCC value) is not required to be incremented by one by the UE after the current cell change, that is, the UE maintains the current security parameter information (NCC value). In case that the second grouping identity information of the source cell is different from the second grouping identity information of the target cell, the security parameter information (NCC value) is required to be incremented by one by the UE after the current cell change.

According to the security processing method provided in the embodiment of the present application, after determining the key update is required based on the first grouping identity information, whether the security parameter information is required to be incremented by one is determined based on the second grouping identity information, ensuring the accuracy of following key generation and ensuring key updates and security parameter information updates in subsequent cell change scenarios, reducing frequent reconfiguration actions due to key updates, reducing signaling overhead, and minimizing the waste of air interface resources.

In some embodiments, determining the security key corresponding to the target cell based on the security-related information includes:
determining a security key-counter list corresponding to the target cell from the security-related information, or generating a security key-counter list corresponding to the target cell based on the security-related information; and
determining the security key corresponding to the target cell based on a security key-counter value of a source cell and the security key-counter list corresponding to the target cell.

In an embodiment, the UE may also determine the security key corresponding to the target cell based on the security key-counter list corresponding to the target cell, combined with the security key-counter value of the source cell.

The security key-counter list (sk-counter list) corresponding to the target cell may be obtained from the security-related information, that is, the security key-counter list is directly configured by the network, or, the security key-counter list corresponding to the target cell may also be generated based on the security-related information.

For example, the network device configures a security key-counter list for each candidate target cell. No duplicate security key-counter values are included in the security key-counter lists in different SNs. Based on the security key-counter list corresponding to the target cell and the security key-counter value of the source cell, whether the source cell and the target cell belong to the same SN is obtained, thereby determining the security key corresponding to the target cell.

For another example, the security key-counter list is obtained based on the initial security key-counter value and global step size included in the security-related information. Then, based on the security key-counter list corresponding to the target cell and the security key-counter value of the source cell, whether the source cell and the target cell belong to the same SN is determined, thereby determining the security key corresponding to the target cell.

According to the security processing method provided in the embodiment of the present application, the security key-counter list corresponding to the target cell is generated and obtained by the network configuration or UE utilizing intermediate information, whether to perform the key update is determined based on the security key-counter list and the security key-counter value of the source cell, and the security key corresponding to the target cell is determined, avoiding frequent reconfiguration or reinitialization operations due to key updates, reducing signaling overhead, and minimizing the waste of air interface resources.

In some embodiments, determining the security key corresponding to the target cell based on the security key-counter value of the source cell and the security key-counter list corresponding to the target cell includes:
determining the security key corresponding to the target cell as a current security key in case that the security key-counter value of the source cell is included in the security key-counter list corresponding to the target cell; or
updating a security key to obtain the security key corresponding to the target cell in case that the security key-counter value of the source cell is not included in the security key-counter list corresponding to the target cell.

In an embodiment, after the security key-counter list corresponding to the target cell is obtained, whether the security key-counter list corresponding to the target cell includes the security key-counter value of the source cell is determined, to obtain whether the source cell and the target cell are cells in the same SN. In case that the source cell and the target cell are cells in the same SN, no key update is required in the current cell change; and in case that the source cell and the target cell are not cells in the same SN, the key update is required in the current cell change.

For example, the security key-counter list corresponding to each candidate target cell is configured by network, or is generated based on the initial security key-counter value and the global step size. The security key-counter lists for candidate target cells in the same SN are the same, the security key-counter lists for candidate target cells in different SNs are different, and no duplicate security key-counter values are included in the security key-counter lists for candidate target cells in different SNs. In case that the security key-counter value of the source cell is included in the security key-counter list corresponding to the target cell, no key update is required, and the current security key is used as the security key corresponding to the target cell.

In case that no security key-counter value of the source cell is included in the security key-counter list corresponding to the target cell, the key update is required to obtain the security key corresponding to the target cell.

The security processing method provided by the above embodiments is further described below by means of specific example.

### Example 7

One security key-counter list (sk-counter list) is configured for each candidate target cell. The network ensures that the sk-counter list for candidate target cells in the same SN is the same, and the sk-counter list values for candidate target cells in different SNs are different. No duplicate security key-counter values are included in the sk-counter lists in different SNs. For example, the sk-counter lists for candidate target cells in SN1 are configured as {1,2,3,4,5,6}, the sk-counter lists for candidate target cells in SN2 are configured as {7,8,9,10,11,12}, and the sk-counter lists for candidate target cells in SN3 are configured as {13,14,15,16,17,18}.

In case that the UE performs the cell change, if the sk-counter used by the source cell is included in the sk-counter list for the target cell, the UE determines that the source cell and the target cell belong to the same SN and does not update the key.

If the sk-counter used by the source cell is not included in the sk-counter list for the target cell, the UE selects the sk-counter in the sk-counter list for the target cell and generates a new SCG side security key based on this sk-counter and the MCG side security key. The new SCG side security key is used for performing signaling/data interaction with the target PSCell cell after accessing the target PSCell cell.

According to the security processing method provided in the embodiment of the present application, by determining whether the security key-counter value of the source cell is included in the security key-counter list corresponding to the target cell, the conclusion of whether the key update is required is obtained to determine the security key corresponding to the target cell. The configuration information of the candidate target cell may be subsequently used for the following cell changes, avoiding frequent reconfiguration or reinitialization operations due to key updates, reducing signaling overhead, and minimizing the waste of air interface resources.

In some embodiments, determining the security key corresponding to the target cell based on the security key-counter value of the source cell and the security key-counter list corresponding to the target cell includes:
determining the security key corresponding to the target cell as the current security key in case that a last security key-counter value in the security key-counter list corresponding to the target cell is equal to the security key-counter value of the source cell; or
updating the security key to obtain the security key corresponding to the target cell in case that a last security key-counter value in the security key-counter list corresponding to the target cell is greater than the security key-counter value of the source cell.

In an embodiment, after the security key-counter list corresponding to the target cell is obtained, whether the last security key-counter value in the security key-counter list corresponding to the target cell is equal to the security key-counter value of the source cell is determined, to obtain whether the source cell and the target cell are cells in the same SN. In case that the source cell and the target cell are cells in the same SN, no key update is required in the current cell change; and in case that the source cell and the target cell are not cells in the same SN, the key update is required in the current cell change. The last security key-counter value in the security key-counter list corresponding to the target cell is not less than the security key-counter value of the source cell.

For example, the security key-counter list corresponding to each candidate target cell is configured by network, or is generated based on the initial security key-counter value and the global step size. The security key-counter lists for candidate target cells in the same SN are the same, the security key-counter lists for candidate target cells in different SNs are different, and no duplicate security key-counter values are included in the security key-counter lists for candidate target cells in different SNs. In case that the last security key-counter value in the security key-counter list corresponding to the target cell is equal to the security key-counter value of the source cell, it is determined that no key update is required, and the current security key is used as the security key corresponding to the target cell.

In case that the last security key-counter value in the security key-counter list corresponding to the target cell is greater than the security key-counter value of the source cell, it is determined that the key update is required to obtain the security key corresponding to the target cell.

According to the security processing method provided in the embodiment of the present application, by comparing the last security key-counter value in the security key-counter list corresponding to the target cell with the security key-counter value of the source cell to obtain whether the key update is required, the security key corresponding to the target cell is determined, avoiding frequent reconfiguration or reinitialization operations due to key updates, reducing signaling overhead, and minimizing the waste of air interface resources.

In some embodiments, generating the security key-counter list corresponding to the target cell based on the security-related information includes:
generating the security key-counter list corresponding to the target cell based on an initial security key-counter value and a global step size included in the security-related information.

In an embodiment, the security key-counter list corresponding to the target cell may be generated from the initial security key-counter value and global step size contained in the security-related information.

For example, the network device configures an initial security key-counter value for each candidate target cell. Each time the cell changes, the latest value in the security key-counter list for the target cell (in the first time, the latest value is the initial security key-counter value) is incremented by the global step to obtain a new security key-counter list. That is, the UE maintains this latest security key-counter list for each candidate target cell, and for the following cell changes, the latest security key-counter value in this security key-counter list is incremented by the global step to obtain the new security key-counter list.

For example, every time the cell changes, the UE starts calculating from the initial security key-counter value of the target cell to obtain the security key-counter list. The UE uses the initial security key-counter value plus the global step size to calculate until the latest security key-counter value is not less than the current security key-counter value being used, thereby obtaining the security key-counter list. That is, the UE does not maintain the security key-counter list. Every time the cell changes, the UE calculates the security key-counter value from initial security key-counter value until it reaches a security key-counter value that is not less than the current security key-counter value being used, thereby obtaining the security key-counter list.

The security processing method provided by the above embodiments is further described below by means of specific example.

### Example 8

An initial sk-counter value is configured for each candidate cell. The network ensures that the initial sk-counter value for candidate cells in the same SN are the same, and the initial sk-counter values for candidate cells in different SNs are different. A global step size is configured. The sk-counter values in different SNs are different is ensured by the initial sk-counter value and the global step size. For example, the initial sk-counter value configured in SN1 is {1}, the initial sk-counter value configured in SN2 is {5}, the initial sk-counter value configured in SN3 is {9}, and the global step size is {10}. The method for UE to determine whether the key update is required includes at least one of the following.
(1) The UE directly generates a sk-counter list with a fixed length for each candidate cell based on the initial value and the global step size. The last sk-counter value in the sk-counter list for the target cell generated each time is the first sk-counter value of the target cell that is not less than the sk-counter value of the source cell. The following procedure of determining the security key corresponding to the target cell based on the sk-counter list corresponding to the target cell is the same as in Example 7, and is not repeated here.
(2) The UE generates the sk-counter value of the target cell based on the initial value and the global step size. In case that the sk-counter value of the target cell is not less than the current security key-counter value being used, the next sk-counter value is not be calculated. That is, the generated sk-counter value of the target cell is the first sk-counter value of the target cell that is not less than the sk-counter value of the source cell. When performing the cell change, the UE calculates a new sk-counter value by incrementing the initial security key-counter value the target cell by the global step size. The new sk-counter value is greater than or equal to the current sk-counter value.

According to (2), in case that the new sk-counter value is equal to the current sk-counter value, the UE determines that the source cell and the target cell are cells in the same SN and no key update is required when changing from the source cell to the target cell. In case that the new sk-counter value is greater than the current sk-counter value, the UE determines that the source cell and the target cell are not cells in the same SN, and the key update is required when changing from the source cell to the target cell. The calculated sk-counter value and MCG side security key are used to generate a new SCG side security key (KgNB) for the UE to perform signaling/data interaction with the target cell after accessing the target PSCell.

According to the security processing method provided in the embodiment of the present application, by generating the security key-counter list in multiple ways, different determining methods are used to determine whether the key is required to be updated, making it flexible for various application scenarios.

In some embodiments, the first grouping identity information, or the second grouping identity information or the security key-counter list is included in configuration information of the candidate target cell.

In an embodiment, the first grouping identity information or the second grouping identity information or the security key-counter list (which may be the initial security key-counter value) received by the UE may be included in the configuration information of the candidate target cell, that is, the first grouping identity information and/or the second grouping identity information, and/or the security key-counter list (which may be the initial security key-counter value) may be configured for each candidate target cell in the subsequent cell change configuration information.

In case that the UE receives the initial security key-counter value, the security key-counter list is required to be derived based on the initial security key-counter value, combined with the global step size. The global step size used to obtain the security key-counter list is a global variable, and the global step size is not included in the configuration information of the candidate target cell.

In some embodiments, the security processing method further includes:
receiving configuration information of the candidate target cell and/or the security-related information transmitted from a network device.

In an embodiment, in the subsequent cell change scenario, the network device configures configuration information of the candidate target cell to the UE, and the configuration information of the candidate target cell is used for subsequent cell change. The configuration information of the candidate target cell may contain the security-related information. At this time, the UE receives the configuration information of the candidate target cell transmitted from the network device and determines the security key corresponding to the target cell based on the security-related information contained in the configuration information of the candidate target cell.

The security-related information may also be included in the cell change command. The UE receives the configuration information of the candidate target cell transmitted from the network device and the cell change command, and determines the security key corresponding to the target cell based on the security-related information contained in the cell change command. In addition, the security-related information may also be transmitted to the UE before receiving the cell change command or after the UE accesses the target cell.

The configuration information of the candidate target cell and the security related information may be transmitted in the same signaling or in different signaling.

In case that the UE only receives the configuration information of the candidate target cell transmitted from the network device and does not receive the security-related information or the network device does not transmit the security related information, the UE uses the current security key to perform signaling/data interaction with the target cell.

According to the security processing method provided in the embodiment of the present application, the network device may transmit the security-related information in multiple ways, making it flexible for various demand scenarios.

In some embodiments, the network device transmits the security-related information to the terminal in one or more of the following cases:
the security key of the target cell is updated by a core network based on an access and mobility management function (AMF) key;
an access and mobility management function (AMF) key is updated by a core network; or
a conventional handover, a conditional handover or a dual active protocol stack handover occurs.

In an embodiment, when the security context changes, the network device is required to reconfigure the security-related information for the UE, that is, transmit new security-related information to the UE. For example, after the network device transmits the security-related information to the UE, the core network recalculates the new security key (such as deriving a new KgNB or a new NH value) based on the AMF key (i.e. KAMF), and the network device is required to reconfigure the security-related information to the UE.

For another example, when the network device transmits the security-related information to the UE and the core network generates a new AMF key (i.e. KAMF), the network device is required to reconfigure the security-related information for the UE.

For another example, when the network device transmits the security-related information to the UE, and the conventional handover, the conditional handover (CHO), or the dual active protocol stack handover (DAPS HO) occurs, the network device is required to reconfigure the security-related information to the UE.

According to the security processing method provided in the embodiment of the present application, the security key corresponding to the target cell is determined based on security-related information and the target cell is the candidate target cell supporting the subsequent cell changes, ensuring key updates in subsequent cell change scenarios and avoiding frequent RRC reconfiguration or LTM initialization due to the key updates, reducing signaling overhead, and minimizing the waste of air interface resources.

FIG. 2 is a second schematic flowchart of a security processing method according to an embodiment of the present application. As shown in FIG. 2, embodiments of the present application provide a security processing method, performed by a network device such as a base station, etc. The method includes:
step 201, transmitting configuration information of the candidate target cell and/or security-related information to a terminal; where the security-related information is used for determining a security key corresponding to a target cell and the target cell is a candidate target cell supporting subsequent cell changes.

In some embodiments, the security-related information includes one or more types of the following:
security parameter information;
security update indicator information;
first grouping identity information;
second grouping identity information; or
a security key-counter list.

In some embodiments, the security update indicator information includes one or more pieces of the following:
information indicating whether a key update is required for a current cell change;
information indicating whether a value of security parameter information corresponding to a current cell change is required to be incremented by one; or
information indicating whether a value of security parameter information is required to be incremented by one after a security key corresponding to a current cell change is updated.

In some embodiments, the security-related information is transmitted by one or more types of the following signaling:
radio resource control (RRC) signaling;
media access control-control element (MAC-CE) signaling; or
downlink control information (DCI) signaling.

In some embodiments, transmitting security-related information to the terminal includes:
transmitting security-related information to the terminal in one or more of the following cases:
the security key of the target cell is updated by a core network based on an AMF key;
an AMF key is updated by a core network; or
a conventional handover, a conditional handover or a dual active protocol stack handover occurs.

In the above cases, the network reconfigures new security-related information for the UE. For example, the network transmits the security-related information to the UE, and in case that the core network updates the AMF key (i.e., KAMF), or the core network derives a new security key based on the AMF key (such as deriving a new KgNB or a new NH value), or the conventional handover/conditional handover/ dual active protocol stack handover occurs, the network transmits new security-related information to the UE.

In an embodiment, the security processing method provided in embodiments of the present application may refer to the above embodiment of the security processing method with the executing subject being the UE, and may achieve the same effect. Therefore, the same parts and beneficial effects as the corresponding method embodiments in this embodiment will not be described here.

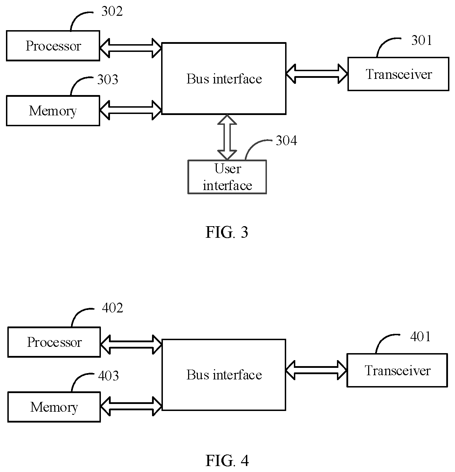

FIG. 3 is a schematic structural diagram of a terminal according to an embodiment of the present application. As shown in FIG. 3, the terminal includes a memory 303, a transceiver 301, and a processor 302;
where the memory 303 is used for storing a computer program; the transceiver 301 is used for receiving and transmitting data under control of the processor 302; and the processor 302 is used for reading the computer program in the memory 303 and performing the following:
determining a security key corresponding to a target cell based on security-related information;
where the target cell is a candidate target cell supporting subsequent cell changes.

In FIG. 3, a bus architecture may include any number of interconnected buses and bridges, which are linked together through various circuits of one or more processors represented by the processor 302 and one or more memories represented by the memory 302. The bus architecture may also link together various other circuits, such as peripherals, voltage regulators, and power management circuits, which are well known in the art, and therefore will not be further described in the present application. The bus interface provides an interface. The transceiver 301 may include multiple elements, i.e., a transmitter and a receiver, units for providing communication with various other devices over transmission media including wireless channels, wired channels, fiber optic cables, and the like. For different user equipment, a user interface 304 may be an interface capable of externally or internally connecting the required device, and the connected device includes, but not limited to, a keypad, a display, a speaker, a microphone, a joystick, and the like.

The processor 302 is responsible for managing the bus architecture and general processing, and the memory 303 may store data used by the processor 302 when performing operations.

In some embodiments, the processor 302 may be a central processing unit (CPU), an application specific integrated circuit (ASIC), a field-programmable gate array (FPGA), or a complex programmable logic device (CPLD). The processor may also use a multi-core architecture.

The processor calls the computer program stored in the memory to execute any of the methods provided in embodiments of the present application according to the obtained executable instructions. The processor and the memory may also be arranged physically separately.

In some embodiments, the security-related information includes one or more types of the following:
security parameter information;
security update indicator information;
first grouping identity information;
second grouping identity information; or
a security key-counter list.

In some embodiments, in case that the security-related information is security parameter information and/or security update indicator information, determining the security key corresponding to the target cell based on the security-related information includes:
determining the security key corresponding to the target cell based on the security parameter information and/or the security update indicator information included in configuration information of the target cell.

In some embodiments, the security update indicator information includes one or more pieces of the following:
information indicating whether a key update is required for a current cell change;
information indicating whether a value of security parameter information corresponding to a current cell change is required to be incremented by one; or
information indicating whether a value of security parameter information is required to be incremented by one after a security key corresponding to a current cell change is updated.

In some embodiments, in case that the security-related information is first grouping identity information, determining the security key corresponding to the target cell based on the security-related information includes:
determining the security key corresponding to the target cell as a current security key in case that first grouping identity information of a source cell is same as first grouping identity information of the target cell; or
updating a security key to obtain the security key corresponding to the target cell in case that first grouping identity information of a source cell is different from first grouping identity information of the target cell.

In some embodiments, the processor is further used for reading the computer program in the memory and performing the following operation:
incrementing a value of security parameter information by one after updating the security key in case that second grouping identity information of the source cell is different from second grouping identity information of the target cell; or
determining that a value of security parameter information remains unchanged after updating the security key in case that second grouping identity information of the source cell is same as second grouping identity information of the target cell.

In some embodiments, determining the security key corresponding to the target cell based on the security-related information includes:
determining a security key-counter list corresponding to the target cell from the security-related information, or generating a security key-counter list corresponding to the target cell based on the security-related information; and
determining the security key corresponding to the target cell based on a security key-counter value of a source cell and the security key-counter list corresponding to the target cell.

In some embodiments, determining the security key corresponding to the target cell based on the security key-counter value of the source cell and the security key-counter list corresponding to the target cell includes:
determining the security key corresponding to the target cell as a current security key in case that the security key-counter value of the source cell is included in the security key-counter list corresponding to the target cell; or
updating a security key to obtain the security key corresponding to the target cell in case that the security key-counter value of the source cell is not included in the security key-counter list corresponding to the target cell.

In some embodiments, determining the security key corresponding to the target cell based on the security key-counter value of the source cell and the security key-counter list corresponding to the target cell includes:
determining the security key corresponding to the target cell as the current security key in case that a last security key-counter value in the security key-counter list corresponding to the target cell is equal to the security key-counter value of the source cell; or
updating the security key to obtain the security key corresponding to the target cell in case that a last security key-counter value in the security key-counter list corresponding to the target cell is greater than the security key-counter value of the source cell.

In some embodiments, generating the security key-counter list corresponding to the target cell based on the security-related information includes:
generating the security key-counter list corresponding to the target cell based on an initial security key-counter value and a global step size included in the security-related information.

In some embodiments, the first grouping identity information, or the second grouping identity information or the security key-counter list is included in configuration information of the candidate target cell.

In some embodiments, the processor is further used for reading the computer program in the memory and performing the following operations:
receiving configuration information of the candidate target cell and/or the security-related information transmitted from a network device.

In some embodiments, the security-related information is transmitted by one or more types of the following signaling:
radio resource control (RRC) signaling;
media access control-control element (MAC-CE) signaling; or
downlink control information (DCI) signaling.

It should be noted that the UE provided in embodiments of the present application may implement all the method steps implemented by the method embodiment with the UE as the executing subject, and may achieve the same effects. Therefore, the same parts and beneficial effects as the method embodiment in this embodiment will not be described here.

FIG. 4 is a schematic structural diagram of a network device according to an embodiment of the present application. As shown in FIG. 4, the network device includes: a memory 403, a transceiver 401, and a processor 402;
where the memory 403 is used for storing a computer program; the transceiver 401 is used for receiving and transmitting data under control of the processor 402; and the processor 402 is used for reading the computer program in the memory 403 and performing the following:
transmitting configuration information of the candidate target cell and/or security-related information to a terminal; where the security-related information is used for determining a security key corresponding to a target cell and the target cell is a candidate target cell supporting subsequent cell changes.

In FIG. 4, a bus architecture may include any number of interconnected buses and bridges, which are linked together through various circuits of one or more processors represented by the processor 402 and one or more memories represented by the memory 403. The bus architecture may also link together various other circuits, such as peripherals, voltage regulators, and power management circuits, which are well known in the art, and therefore will not be further described in the present application. The bus interface provides an interface. The transceiver 401 may include multiple elements, i.e., a transmitter and a receiver, units for providing communication with various other devices over transmission media including wireless channels, wired channels, fiber optic cables, and the like. The processor 402 is responsible for managing the bus architecture and general processing, and the memory 403 may store data used by the processor 402 when performing operations.

The processor 402 may be a central processing unit (CPU), an application specific integrated circuit (ASIC), a field-programmable gate array (FPGA), or a complex programmable logic device (CPLD). The processor may also use a multi-core architecture.

In some embodiments, the security-related information includes one or more types of the following:
security parameter information;
security update indicator information;
first grouping identity information;
second grouping identity information; or
a security key-counter list.

In some embodiments, the security update indicator information includes one or more pieces of the following:
information indicating whether a key update is required for a current cell change;
information indicating whether a value of security parameter information corresponding to a current cell change is required to be incremented by one; or
information indicating whether a value of security parameter information is required to be incremented by one after a security key corresponding to a current cell change is updated.

In some embodiments, the security-related information is transmitted by one or more types of the following signaling:
radio resource control (RRC) signaling;
media access control-control element (MAC-CE) signaling; or
downlink control information (DCI) signaling.

In some embodiments, transmitting the security-related information to the terminal includes:
transmitting security-related information to the terminal in one or more of the following cases:
the security key of the target cell is updated by a core network based on an access and mobility management function (AMF) key;
an access and mobility management function (AMF) key is updated by a core network; or
a conventional handover, a conditional handover or a dual active protocol stack handover occurs.

In an embodiment, the network device provided in embodiments of the present application may implement all the method steps implemented by the method embodiment with the network device as the executing subject, and may achieve the same effects. Therefore, the same parts and beneficial effects as the method embodiment in this embodiment will not be described here.

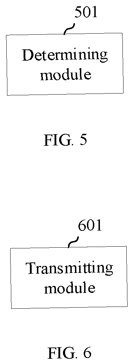

FIG. 5 is a first schematic structural diagram of a security processing apparatus according to an embodiment of the present application. As shown in FIG. 5, an embodiment of the present application provides a security processing apparatus including a determining module 501,
where the determining module 501 is used for determining a security key corresponding to a target cell based on security-related information; where the target cell is a candidate target cell supporting subsequent cell changes.

In some embodiments, the security-related information includes one or more types of the following:
security parameter information;
security update indicator information;
first grouping identity information;
second grouping identity information; or
a security key-counter list.

In some embodiments, in case that the security-related information is security parameter information and/or security update indicator information, the determining module includes:
a first determining unit, used for determining the security key corresponding to the target cell based on the security parameter information and/or the security update indicator information included in configuration information of the target cell.

In some embodiments, the security update indicator information includes one or more pieces of the following:
information indicating whether a key update is required for a current cell change;
information indicating whether a value of security parameter information corresponding to a current cell change is required to be incremented by one; or
information indicating whether a value of security parameter information is required to be incremented by one after a security key corresponding to a current cell change is updated.

In some embodiments, in case that the security-related information is first grouping identity information, the determining module includes:
a second determining unit, used for determining the security key corresponding to the target cell as a current security key in case that first grouping identity information of a source cell is same as first grouping identity information of the target cell; or
an obtaining unit, used for updating a security key to obtain the security key corresponding to the target cell in case that first grouping identity information of a source cell is different from first grouping identity information of the target cell.

In some embodiments, the determining module further includes:
a calculating unit, used for incrementing a value of security parameter information by one after updating the security key in case that second grouping identity information of the source cell is different from second grouping identity information of the target cell; or
a third determining unit, used for determining that a value of security parameter information remains unchanged after updating the security key in case that second grouping identity information of the source cell is same as second grouping identity information of the target cell.

In some embodiments, the determining module includes:
a fourth determining unit, used for determining a security key-counter list corresponding to the target cell from the security-related information, or generating a security key-counter list corresponding to the target cell based on the security-related information; and
a fifth determining unit, used for determining the security key corresponding to the target cell based on a security key-counter value of a source cell and the security key-counter list corresponding to the target cell.

In some embodiments, the fifth determining unit includes:
a first determining subunit, used for determining the security key corresponding to the target cell as a current security key in case that the security key-counter value of the source cell is included in the security key-counter list corresponding to the target cell; or
a first obtaining subunit, used for updating a security key to obtain the security key corresponding to the target cell in case that the security key-counter value of the source cell is not included in the security key-counter list corresponding to the target cell.

In some embodiments, the fifth determining unit includes:
a second determining subunit, used for determining the security key corresponding to the target cell as the current security key in case that a last security key-counter value in the security key-counter list corresponding to the target cell is equal to the security key-counter value of the source cell; or
a second obtaining subunit, used for updating the security key to obtain the security key corresponding to the target cell in case that a last security key-counter value in the security key-counter list corresponding to the target cell is greater than the security key-counter value of the source cell.

In some embodiments, the fourth determining unit includes:
a third obtaining subunit, used for generating the security key-counter list corresponding to the target cell based on an initial security key-counter value and a global step size included in the security-related information.

In some embodiments, the first grouping identity information, or the second grouping identity information or the security key-counter list is included in configuration information of the candidate target cell.

In some embodiments, the security processing apparatus further includes:
a receiving module, used for receiving configuration information of the candidate target cell and/or the security-related information transmitted from a network device.

In some embodiments, the security-related information is transmitted by one or more types of the following signaling:
radio resource control (RRC) signaling;
media access control-control element (MAC-CE) signaling; or
downlink control information (DCI) signaling.

In an embodiment, the security processing apparatus provided in embodiments of the present application may implement all the method steps implemented by the method embodiment with the UE as the executing subject, and may achieve the same effects. Therefore, the same parts and beneficial effects as the method embodiment in this embodiment will not be described here.

FIG. 6 is a second schematic structural diagram of a security processing apparatus according to an embodiment of the present application. As shown in FIG. 6, an embodiment of the present application provides a security processing apparatus including a transmitting module 601,
where the transmitting module 601 is used for transmitting configuration information of the candidate target cell and/or security-related information to a terminal; where the security-related information is used for determining a security key corresponding to a target cell and the target cell is a candidate target cell supporting subsequent cell changes.

In some embodiments, the security-related information includes one or more types of the following:
security parameter information;
security update indicator information;
first grouping identity information;
second grouping identity information; or
a security key-counter list.

In some embodiments, the security update indicator information includes one or more pieces of the following:
information indicating whether a key update is required for a current cell change;
information indicating whether a value of security parameter information corresponding to a current cell change is required to be incremented by one; or
information indicating whether a value of security parameter information is required to be incremented by one after a security key corresponding to a current cell change is updated.

In some embodiments, the security-related information is transmitted by one or more types of the following signaling:
radio resource control (RRC) signaling;
media access control-control element (MAC-CE) signaling; or
downlink control information (DCI) signaling.

In some embodiments, the transmitting module includes:
a transmitting unit, used for transmitting security-related information to the terminal in one or more of the following cases:
the security key of the target cell is updated by a core network based on an access and mobility management function (AMF) key;
an access and mobility management function (AMF) key is updated by a core network; or
a conventional handover, a conditional handover or a dual active protocol stack handover occurs.

In an embodiment, the security processing apparatus provided in embodiments of the present application may implement all the method steps implemented by the method embodiment with the capability management function as the executing subject, and may achieve the same effects. Therefore, the same parts and beneficial effects as the method embodiment in this embodiment will not be described here.

It should be noted that, the division of units/modules in embodiments of the present application is schematic, and is only a logical function division, and there may be other division manners in actual implementation. In addition, the functional units in the various embodiments of the present application may be integrated into one processing unit, or each unit may exist alone physically, or two or more units may be integrated into one unit. The above-mentioned integrated unit may be implemented in the form of hardware or software functional unit.

If the integrated unit is implemented in the form of a software functional unit and sold or used as a separate product, it may be stored in a computer readable storage medium. Based on such understanding, the solutions of the present application in essence or a part of the solutions that contributes to the related art, or all or part of the solutions, may be embodied in the form of a software product, which is stored in a storage medium, including several instructions to cause a computer device (which may be a personal computer, server, or network device, etc.) or a processor to perform all or part of the steps of the methods described in the respective embodiments of the present application. The storage medium described above includes various media that may store a program code such as a U disk, a mobile hard disk, a read-only memory (ROM), a random access memory (RAM), a magnetic disk, or a compact disk.

Embodiments of the present application further provide a non-transient readable storage medium, where the non-transient readable storage medium stores a computer program for causing a computer to perform the security processing method provided in the above embodiments.

In an embodiment, the non-transient readable storage medium provided in embodiments of the present application may implement all the method steps implemented in the above method embodiments and achieve the same effects. Therefore, specific descriptions of the same parts and beneficial effects as the method embodiments in this embodiment is not repeated here.

It should be noted that the computer-readable storage medium may be any available medium or data storage device that may be accessed by the computer, including but not limited to, a magnetic storage (e.g., a floppy disk, a hard disk, a magnetic tape, a magneto-optical disk (MO), etc.), optical memory (such as CD, DVD, BD, HVD, etc.), and a semiconductor memory (such as ROM, EPROM, EEPROM, non-volatile memory (NAND FLASH), solid-state drive (SSD)), etc.

Embodiments of the present application further provide a processor-readable storage medium storing a computer program, where the computer program is used to cause a processor to perform the security processing method provided in the above embodiments.

In an embodiment, the processor-readable storage medium provided in embodiments of the present application may implement all the method steps implemented in the above method embodiments and achieve the same effects. Therefore, specific descriptions of the same parts and beneficial effects as the method embodiments in this embodiment is not repeated here.

Embodiments of the present application further provide a computer-readable storage medium storing a computer program, where the computer program is used to cause a computer to perform the security processing method provided in the above embodiments.

In an embodiment, the computer-readable storage medium provided in embodiments of the present application may implement all the method steps implemented in the above method embodiments and achieve the same effects. Therefore, specific descriptions of the same parts and beneficial effects as the method embodiments in this embodiment is not repeated here.

Embodiments of the present application further provide a communication device storing a computer program, where the computer program is used to cause the communication device to perform the security processing method provided in the above embodiments.

In an embodiment, the communication device provided in embodiments of the present application may implement all the method steps implemented in the above method embodiments and achieve the same effects. Therefore, specific descriptions of the same parts and beneficial effects as the method embodiments in this embodiment is not repeated here.

Embodiments of the present application further provide a chip product-readable storage medium storing a computer program, where the computer program is used to cause a chip product to perform the security processing method provided in the above embodiments.

In an embodiment, the chip product-readable storage medium provided in embodiments of the present application may implement all the method steps implemented in the above method embodiments and achieve the same technical effects. Therefore, specific descriptions of the same parts and beneficial effects as the method embodiments in this embodiment is not repeated here.

Additionally, it should be noted that the terms "first", "second", etc. in embodiments of the present application are used to distinguish similar objects and are not used to describe a specific order or sequence. It should be understood that the terms used in this way may be interchanged in appropriate circumstances. The embodiments of the present application may be implemented in order other than those illustrated or described herein, and the objects distinguished by "first" and "second" are usually of the same class, without limiting the number of objects. For example, the first object may be one or multiple.

In embodiments of the present application, the term "and/or" describes a related relationship of associated objects, and indicates that there may be three kinds of relationships. For example, A and/or B may represent that A exists alone, A and B exist simultaneously, and B exists alone. Character "/" generally indicates that associated objects before and after are in an "or" relationship.

The term "multiple" in embodiments of the present application refers to two or more quantifiers, similar to other quantifiers.

The solutions provided by the embodiments of the present application may be applicable to various systems, especially a 5G or 6G system For example, applicable systems may be a global system of mobile communication (GSM) system, a code division multiple access (CDMA) system, a wideband code division multiple access (WCDMA), general packet radio service (GPRS) system, a long term evolution (LTE) system, a LTE frequency division duplex (FDD) system, a LTE time division duplex (TDD) system, a long term evolution advanced (LTE-A) system, a universal mobile telecommunication system (UMTS), a worldwide interoperability for microwave access (WiMAX) system, a 5G new radio (NR) system, and a 6G system etc. These various systems include a terminal device and a network device. The system may also include a core network part, such as an evolved packet system (EPS), a 5G system (5GS) and the like.

The terminal device involved in the embodiments of the present application may be a device that provides voice and/or data connectivity to a user, a hand-held device with a wireless connection function, or other processing device connected to a wireless modem. In different systems, the names of the terminal device may be different. For example, in the 5G system, the terminal device may be referred to as a user equipment (UE). A wireless terminal device may communicate with one or more core networks (CNs) via a radio access network (RAN), and the wireless terminal device may be a mobile terminal, such as a mobile phone (or referred to as a cellular phone) and a computer with mobile terminal device, e.g., a portable mobile device, a pocket-sized mobile device, a handheld mobile device, a computer-built mobile device or a vehicle-mounted mobile device, which exchange language and/or data with the radio access network. For example, a personal communication service (PCS) phone, a radio phone, a session initiated protocol (SIP) phone, a wireless local loop (WLL) station, a personal digital assistant (PDA) and other devices. A wireless terminal device may also be referred to as a system, a subscriber unit, a subscriber station, a mobile station, a mobile, a remote station, an access point, a remote terminal, an access terminal, a user terminal, a user agent, and a user device, which are not limited in the embodiments of the present application.

The network device involved in the embodiments of the present application may be a base station, and the base station may include multiple cells providing services for a terminal. Depending on specific application scenarios, the base station may also be referred as to an access point, or may be a device in the access network that communicates with a wireless terminal device through one or more sectors on the air interface, or other names. The network device may be used to mutually exchange received air frames with Internet Protocol (IP) packets, and act as a router between a wireless terminal device and a rest part of the access network, and the rest part of the access network may include an IP communication network. The network device may also coordinate attribute management for an air interface. For example, the network device involved in the embodiments of the present application may be a base transceiver station (BTS) in a global system for mobile communications (GSM) or a code division multiple access (CDMA), may also be a node B in a wide-band code division multiple access (WCDMA), may also be an evolutional node B (eNB or e-Node B) in a long term evolution (LTE) system, a 5G base station (gNB) in 5G network architecture (next generation system), may also be a Home evolved Node B (HeNB), a relay node (relay node), a femto, a pico base station (pico), etc., which are not limited in the embodiments of the present application. In some network structures, a network device may include a centralized unit (CU) node and a distributed unit (DU) node, and the centralized unit and the distributed unit may also be geographically separated.

"Determining B based on A" in the present application means that the factor A should be considered when determining B. It is not limited to "determining B only based on A", but also includes "determining B based on A and C", "determining B based on A, C and E", "determining C based on A, and further determining B based on C", etc. In addition, it may also include taking A as a condition for determining B, for example, "in case that A meets a first condition, determining B by using a first method". For another example, "in case that A meets a second condition, determining B", etc. For another example, "in case that A meets a third condition, determining B based on a first parameter", etc. In an embodiment, it may be that A is taken as a condition for determining a factor of B, for example, "in case that A meets the first condition, determining C by using the first method, and further determining B based on C", etc.

Multi-input multi-output (MIMO) transmission may be performed between the network device and the terminal device using one or more antennas and the MIMO transmission may be single user MIMO (SU-MIMO) or multiple user MIMO (MU-MIMO). According to the form and number of antenna combinations, MIMO transmission may be 2D-MIMO, 3D-MIMO, FD-MIMO, or massive-MIMO, and may also be diversity transmission, precoding transmission, or beamforming transmission, etc.

Those skilled in the art should understand that the embodiments of the present application may be provided as methods, systems, or computer program products. Therefore, the present application may take the form of a fully hardware implementation, a fully software implementation, or a combination of software and hardware implementation. Moreover, the present application may take the form of a computer program product implemented on one or more computer usable storage medium (including but not limited to disk storage and optical storage) containing computer usable program code.

The present application is described with reference to flow charts and/or block diagrams of methods, apparatus (systems), and computer program products according to embodiments of the present application. It should be understood that each flow and/or block in the flow charts and/or block diagrams, and combinations thereof may be implemented by computer-executable instructions. These computer-executable instructions may be provided to processors of a general purpose computer, a special purpose computer, an embedded processor or other programmable data processing device to produce a machine and the instructions executed by the processor of the computer or other programmable data processing device form a means for performing the functions specified in one or more flows in a flowchart and/or one or more blocks of a block diagram.

These processor-executable instructions may also be stored in a processor-readable memory capable of directing a computer or other programmable data processing apparatus to operate in a particular manner, and the instructions stored in the processor-readable memory may result in a manufacture including instruction means, the instruction means may perform the functions specified in one or more flows of the flowchart and/or one or more blocks of the block diagram.

These processor-executable instructions may also be loaded onto a computer or other programmable data processing device to cause a series of operational steps to be performed on the computer or other programmable device to produce a computer-implemented procedure and instructions performed on the computer or other programmable devices provide steps for performing the functions specified in one or more flows of the flowchart and/or one or more blocks of the block diagram.

It is apparent to those skilled in the art that various modifications and variations may be made in the present application without departing from the scope of the present application. As such, provided that these modifications and variations of the present application fall within the scope of the claims of the present application and their equivalents, the present application is also intended to cover such modifications and variations.

## Claims

1. A security processing method, performed by a terminal, comprising:
determining a security key corresponding to a target cell based on security-related information;
wherein the target cell is a candidate target cell supporting subsequent cell changes.

2. The security processing method of claim 1, wherein the security-related information comprises one or more types of the following:
security parameter information;
security update indicator information;
first grouping identity information;
second grouping identity information; or
a security key-counter list.

3. The security processing method of claim 1, wherein in case that the security-related information is security parameter information and/or security update indicator information, determining the security key corresponding to the target cell based on the security-related information comprises:
determining the security key corresponding to the target cell based on the security parameter information and/or the security update indicator information included in configuration information of the target cell.

4. The security processing method of claim 3, wherein the security update indicator information comprises one or more pieces of the following:
information indicating whether a key update is required for a current cell change;
information indicating whether a value of security parameter information corresponding to a current cell change is required to be incremented by one; or
information indicating whether a value of security parameter information is required to be incremented by one after a security key corresponding to a current cell change is updated.

5. The security processing method of claim 1, wherein in case that the security-related information is first grouping identity information, determining the security key corresponding to the target cell based on the security-related information comprises:
determining the security key corresponding to the target cell as a current security key in case that first grouping identity information of a source cell is same as first grouping identity information of the target cell; or
updating a security key to obtain the security key corresponding to the target cell in case that first grouping identity information of a source cell is different from first grouping identity information of the target cell.

6. The security processing method of claim 5, further comprising:
incrementing a value of security parameter information by one after updating the security key in case that second grouping identity information of the source cell is different from second grouping identity information of the target cell; or
determining that a value of security parameter information remains unchanged after updating the security key in case that second grouping identity information of the source cell is same as second grouping identity information of the target cell.

7. The security processing method of claim 1, wherein determining the security key corresponding to the target cell based on the security-related information comprises:
determining a security key-counter list corresponding to the target cell from the security-related information, or generating a security key-counter list corresponding to the target cell based on the security-related information; and
determining the security key corresponding to the target cell based on a security key-counter value of a source cell and the security key-counter list corresponding to the target cell.

8. The security processing method of claim 7, wherein determining the security key corresponding to the target cell based on the security key-counter value of the source cell and the security key-counter list corresponding to the target cell comprises:
determining the security key corresponding to the target cell as a current security key in case that the security key-counter value of the source cell is included in the security key-counter list corresponding to the target cell; or
updating a security key to obtain the security key corresponding to the target cell in case that the security key-counter value of the source cell is not included in the security key-counter list corresponding to the target cell.

9. The security processing method of claim 7, wherein determining the security key corresponding to the target cell based on the security key-counter value of the source cell and the security key-counter list corresponding to the target cell comprises:
determining the security key corresponding to the target cell as the current security key in case that a last security key-counter value in the security key-counter list corresponding to the target cell is equal to the security key-counter value of the source cell; or
updating the security key to obtain the security key corresponding to the target cell in case that a last security key-counter value in the security key-counter list corresponding to the target cell is greater than the security key-counter value of the source cell.

10. The security processing method of claim 7, wherein generating the security key-counter list corresponding to the target cell based on the security-related information comprises:
generating the security key-counter list corresponding to the target cell based on an initial security key-counter value and a global step size included in the security-related information.

11. The security processing method of any of claims 5-7, wherein the first grouping identity information, or the second grouping identity information or the security key-counter list is included in configuration information of the candidate target cell.

12. The security processing method of claim 1, further comprising:
receiving configuration information of the candidate target cell and/or the security-related information transmitted from a network device.

13. The security processing method of claim 1, wherein the security-related information is transmitted by one or more types of the following signaling:
radio resource control (RRC) signaling;
media access control-control element (MAC-CE) signaling; or
downlink control information (DCI) signaling.

14. A security processing method, performed by a network device, comprising:
transmitting configuration information of the candidate target cell and/or security-related information to a terminal; wherein the security-related information is used for determining a security key corresponding to a target cell and the target cell is a candidate target cell supporting subsequent cell changes.

15. The security processing method of claim 14, wherein the security-related information comprises one or more types of the following:
security parameter information;
security update indicator information;
first grouping identity information;
second grouping identity information; or
a security key-counter list.

16. The security processing method of claim 15, wherein the security update indicator information comprises one or more pieces of the following:
information indicating whether a key update is required for a current cell change;
information indicating whether a value of security parameter information corresponding to a current cell change is required to be incremented by one; or
information indicating whether a value of security parameter information is required to be incremented by one after a security key corresponding to a current cell change is updated.

17. The security processing method of claim 14, wherein the security-related information is transmitted by one or more types of the following signaling:
radio resource control (RRC) signaling;
media access control-control element (MAC-CE) signaling; or
downlink control information (DCI) signaling.

18. The security processing method of claim 14, wherein transmitting the security-related information to the terminal comprises:
transmitting security-related information to the terminal in one or more of the following cases:
the security key of the target cell is updated by a core network based on an access and mobility management function (AMF) key;
an access and mobility management function (AMF) key is updated by a core network; or
a conventional handover, a conditional handover or a dual active protocol stack handover occurs.

19. A terminal, comprising: a memory, a transceiver, and a processor;
wherein the memory is used for storing a computer program; the transceiver is used for receiving and transmitting data under control of the processor; and the processor is used for reading the computer program in the memory and performing the following:
determining a security key corresponding to a target cell based on security-related information;
wherein the target cell is a candidate target cell supporting subsequent cell changes.

20. The terminal of claim 19, wherein the security-related information comprises one or more types of the following:
security parameter information;
security update indicator information;
first grouping identity information;
second grouping identity information; or
a security key-counter list.

21. The terminal of claim 19, wherein in case that the security-related information is security parameter information and/or security update indicator information, determining the security key corresponding to the target cell based on the security-related information comprises:
determining the security key corresponding to the target cell based on the security parameter information and/or the security update indicator information included in configuration information of the target cell.

22. The terminal of claim 21, wherein the security update indicator information comprises one or more pieces of the following:
information indicating whether a key update is required for a current cell change;
information indicating whether a value of security parameter information corresponding to a current cell change is required to be incremented by one; or
information indicating whether a value of security parameter information is required to be incremented by one after a security key corresponding to a current cell change is updated.

23. The terminal of claim 19, wherein in case that the security-related information is first grouping identity information, determining the security key corresponding to the target cell based on the security-related information comprises:
determining the security key corresponding to the target cell as a current security key in case that first grouping identity information of a source cell is same as first grouping identity information of the target cell; or
updating a security key to obtain the security key corresponding to the target cell in case that first grouping identity information of a source cell is different from first grouping identity information of the target cell.

24. The terminal of claim 23, wherein the processor is further used for reading the computer program in the memory and performing the following operations:
incrementing a value of security parameter information by one after updating the security key in case that second grouping identity information of the source cell is different from second grouping identity information of the target cell; or
determining that a value of security parameter information remains unchanged after updating the security key in case that second grouping identity information of the source cell is same as second grouping identity information of the target cell.

25. The terminal of claim 19, wherein determining the security key corresponding to the target cell based on the security-related information comprises:
determining a security key-counter list corresponding to the target cell from the security-related information, or generating a security key-counter list corresponding to the target cell based on the security-related information; and
determining the security key corresponding to the target cell based on a security key-counter value of a source cell and the security key-counter list corresponding to the target cell.

26. The terminal of claim 25, wherein determining the security key corresponding to the target cell based on the security key-counter value of the source cell and the security key-counter list corresponding to the target cell comprises:
determining the security key corresponding to the target cell as a current security key in case that the security key-counter value of the source cell is included in the security key-counter list corresponding to the target cell; or
updating a security key to obtain the security key corresponding to the target cell in case that the security key-counter value of the source cell is not included in the security key-counter list corresponding to the target cell.

27. The terminal of claim 25, wherein determining the security key corresponding to the target cell based on the security key-counter value of the source cell and the security key-counter list corresponding to the target cell comprises:
determining the security key corresponding to the target cell as the current security key in case that a last security key-counter value in the security key-counter list corresponding to the target cell is equal to the security key-counter value of the source cell; or
updating the security key to obtain the security key corresponding to the target cell in case that a last security key-counter value in the security key-counter list corresponding to the target cell is greater than the security key-counter value of the source cell.

28. The terminal of claim 25, wherein generating the security key-counter list corresponding to the target cell based on the security-related information comprises:
generating the security key-counter list corresponding to the target cell based on an initial security key-counter value and a global step size included in the security-related information.

29. The terminal of any of claims 23-25, wherein the first grouping identity information, or the second grouping identity information or the security key-counter list is included in configuration information of the candidate target cell.

30. The terminal of claim 19, wherein the processor is further used for reading the computer program in the memory and performing the following operation of:
receiving configuration information of the candidate target cell and/or the security-related information transmitted from a network device.

31. The terminal of claim 19, wherein the security-related information is transmitted by one or more types of the following signaling:
radio resource control (RRC) signaling;
media access control-control element (MAC-CE) signaling; or
downlink control information (DCI) signaling.

32. A network device, comprising: a memory, a transceiver, and a processor;
wherein the memory is used for storing a computer program; the transceiver is used for receiving and transmitting data under control of the processor; and the processor is used for reading the computer program in the memory and performing the following:
transmitting configuration information of the candidate target cell and/or security-related information to a terminal; wherein the security-related information is used for determining a security key corresponding to a target cell and the target cell is a candidate target cell supporting subsequent cell changes.

33. The network device of claim 32, wherein the security-related information comprises one or more types of the following:
security parameter information;
security update indicator information;
first grouping identity information;
second grouping identity information; or
a security key-counter list.

34. The network device of claim 33, wherein the security update indicator information comprises one or more pieces of the following:
information indicating whether a key update is required for a current cell change;
information indicating whether a value of security parameter information corresponding to a current cell change is required to be incremented by one; or
information indicating whether a value of security parameter information is required to be incremented by one after a security key corresponding to a current cell change is updated.

35. The network device of claim 32, wherein the security-related information is transmitted by one or more types of the following signaling:
radio resource control (RRC) signaling;
media access control-control element (MAC-CE) signaling; or
downlink control information (DCI) signaling.

36. The network device of claim 32, wherein transmitting the security-related information to the terminal comprises:
transmitting security-related information to the terminal in one or more of the following cases:
the security key of the target cell is updated by a core network based on an access and mobility management function (AMF) key;
an access and mobility management function (AMF) key is updated by a core network; or
a conventional handover, a conditional handover or a dual active protocol stack handover occurs.

37. A security processing apparatus, comprising:
a determining module, used for determining a security key corresponding to a target cell based on security-related information;
wherein the target cell is a candidate target cell supporting subsequent cell changes.

38. The security processing apparatus of claim 37, wherein the security-related information comprises one or more types of the following:
security parameter information;
security update indicator information;
first grouping identity information;
second grouping identity information; or
a security key-counter list.

39. The security processing apparatus of claim 37, wherein in case that the security-related information is security parameter information and/or security update indicator information, the determining module comprises:
a first determining unit, used for determining the security key corresponding to the target cell based on the security parameter information and/or the security update indicator information included in configuration information of the target cell.

40. The security processing apparatus of claim 39, wherein the security update indicator information comprises one or more pieces of the following:
information indicating whether a key update is required for a current cell change;
information indicating whether a value of security parameter information corresponding to a current cell change is required to be incremented by one; or
information indicating whether a value of security parameter information is required to be incremented by one after a security key corresponding to a current cell change is updated.

41. The security processing apparatus of claim 37, wherein in case that the security-related information is first grouping identity information, the determining module comprises:
a second determining unit, used for determining the security key corresponding to the target cell as a current security key in case that first grouping identity information of a source cell is same as first grouping identity information of the target cell; or
an obtaining unit, used for updating a security key to obtain the security key corresponding to the target cell in case that first grouping identity information of a source cell is different from first grouping identity information of the target cell.

42. The security processing apparatus of claim 41, wherein the determining module further comprises:
a calculating unit, used for incrementing a value of security parameter information by one after updating the security key in case that second grouping identity information of the source cell is different from second grouping identity information of the target cell; or
a third determining unit, used for determining that a value of security parameter information remains unchanged after updating the security key in case that second grouping identity information of the source cell is same as second grouping identity information of the target cell.

43. The security processing apparatus of claim 37, wherein the determining module comprises:
a fourth determining unit, used for determining a security key-counter list corresponding to the target cell from the security-related information, or generating a security key-counter list corresponding to the target cell based on the security-related information; and
a fifth determining unit, used for determining the security key corresponding to the target cell based on a security key-counter value of a source cell and the security key-counter list corresponding to the target cell.

44. The security processing apparatus of claim 43, wherein the fifth determining unit comprises:
a first determining subunit, used for determining the security key corresponding to the target cell as a current security key in case that the security key-counter value of the source cell is included in the security key-counter list corresponding to the target cell; or
a first obtaining subunit, used for updating a security key to obtain the security key corresponding to the target cell in case that the security key-counter value of the source cell is not included in the security key-counter list corresponding to the target cell.

45. The security processing apparatus of claim 43, wherein the fifth determining unit comprises:
a second determining subunit, used for determining the security key corresponding to the target cell as the current security key in case that a last security key-counter value in the security key-counter list corresponding to the target cell is equal to the security key-counter value of the source cell; or
a second obtaining subunit, used for updating the security key to obtain the security key corresponding to the target cell in case that a last security key-counter value in the security key-counter list corresponding to the target cell is greater than the security key-counter value of the source cell.

46. The security processing apparatus of claim 43, wherein the fourth determining unit comprises:
a third obtaining subunit, used for generating the security key-counter list corresponding to the target cell based on an initial security key-counter value and a global step size included in the security-related information.

47. The security processing apparatus of any of claims 41-43, wherein the first grouping identity information, or the second grouping identity information or the security key-counter list is included in configuration information of the candidate target cell.

48. The security processing apparatus of claim 1, further comprising:
a receiving module, used for receiving configuration information of the candidate target cell and/or the security-related information transmitted from a network device.

49. The security processing apparatus of claim 37, wherein the security-related information is transmitted by one or more types of the following signaling:
radio resource control (RRC) signaling;
media access control-control element (MAC-CE) signaling; or
downlink control information (DCI) signaling.

50. A security processing apparatus, comprising:
a transmitting module, used for transmitting configuration information of the candidate target cell and/or security-related information to a terminal; wherein the security-related information is used for determining a security key corresponding to a target cell and the target cell is a candidate target cell supporting subsequent cell changes.

51. The security processing apparatus of claim 50, wherein the security-related information comprises one or more types of the following:
security parameter information;
security update indicator information;
first grouping identity information;
second grouping identity information; or
a security key-counter list.

52. The security processing apparatus of claim 51, wherein the security update indicator information comprises one or more pieces of the following:
information indicating whether a key update is required for a current cell change;
information indicating whether a value of security parameter information corresponding to a current cell change is required to be incremented by one; or
information indicating whether a value of security parameter information is required to be incremented by one after a security key corresponding to a current cell change is updated.

53. The security processing apparatus of claim 50, wherein the security-related information is transmitted by one or more types of the following signaling:
radio resource control (RRC) signaling;
media access control-control element (MAC-CE) signaling; or
downlink control information (DCI) signaling.

54. The security processing apparatus of claim 50, wherein the transmitting module comprises:
a transmitting unit, used for transmitting security-related information to the terminal in one or more of the following cases:
the security key of the target cell is updated by a core network based on an access and mobility management function (AMF) key;
an access and mobility management function (AMF) key is updated by a core network; or
a conventional handover, a conditional handover or a dual active protocol stack handover occurs.

55. A non-transient readable storage medium storing a computer program for causing a processor to perform the security processing method according to any of claims 1 to 13.

56. A non-transient readable storage medium storing a computer program for causing a processor to perform the security processing method according to any of claims 14 to 18.
